(19) Europäisches Patentamt / European Patent Office / Office européen des brevets

(11) **EP 4 245 724 A1**

(12) **EUROPEAN PATENT APPLICATION**

(43) Date of publication:
**20.09.2023 Bulletin 2023/38**

(21) Application number: **22191679.4**

(22) Date of filing: **23.08.2022**

(51) International Patent Classification (IPC):
**C01G 33/00** $^{(2006.01)}$

(52) Cooperative Patent Classification (CPC):
**C01G 33/00;** C01P 2002/60; C01P 2004/03;
C01P 2004/61; C01P 2004/62; C01P 2006/40

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2022 JP 2022040257**

(71) Applicant: **KABUSHIKI KAISHA TOSHIBA**
**Minato-ku**
**Tokyo**
**105-0023 (JP)**

(72) Inventors:
• **HARADA, Yasuhiro**
**Minato-ku, Tokyo, 105-0023 (JP)**
• **YAMASHITA, Yasunobu**
**Minato-ku, Tokyo, 105-0023 (JP)**
• **YOSHIDA, Yorikazu**
**Minato-ku, Tokyo, 105-0023 (JP)**
• **UEDA, Kakuya**
**Minato-ku, Tokyo, 105-0023 (JP)**
• **TAKAMI, Norio**
**Minato-ku, Tokyo, 105-0023 (JP)**

(74) Representative: **Hoffmann Eitle**
**Patent- und Rechtsanwälte PartmbB**
**Arabellastraße 30**
**81925 München (DE)**

(54) **ACTIVE MATERIAL, ELECTRODE, SECONDARY BATTERY, BATTERY PACK, AND VEHICLE**

(57) In general, according to one approach, an active material including particles containing a niobium-containing oxide is provided. The particles containing the niobium-containing oxide contain single particles (394) (501, 503, or 505) having protruded parts and recessed parts (502, 504). Three or more of the recessed parts (502, 504) satisfy $0.1 \leq a/L \leq 0.5$ (1). Where L is a length of a tangent line in contact with a first protruded part (501, 505) and a second protruded part (503), and a is a maximum length of a perpendicular line from the tangent line to a recessed part (502, 504) defined by the first protruded part (501, 505) and the second protruded part (503).

F I G. 1

EP 4 245 724 A1

**Description**

FIELD

The present disclosure relates to an active material, an electrode, a secondary battery, a battery pack and a vehicle.

BACKGROUND

In recent years, the research and development of a secondary battery such as a nonaqueous electrolyte secondary battery (such as a lithium ion secondary battery) have been actively advanced as a high energy density battery. The secondary battery such as a nonaqueous electrolyte secondary battery is expected to be used as a power source for vehicles such as a hybrid electric automobile and an electric automobile, or an uninterruptible power source for base stations for portable telephone, or the like. For this, the secondary battery is required to have a high energy density as well as other performances such as excellent rapid charge-and-discharge performance and long-term reliability. For example, a secondary battery enabling rapid charge-and-discharge not only remarkably shortens a charging time but also makes it possible to improve the performance of the motive force of a vehicle such as a hybrid electric automobile and to efficiently recover the regenerative energy of the motive force.

In order to enable rapid charge-and-discharge, it is necessary that electrons and lithium ions can rapidly migrate between a positive electrode and a negative electrode. However, when a battery using a carbon-based negative electrode repeats rapid charge-and-discharge, dendrite precipitation of metal lithium occurs on the electrode, which may result in heat generation and fires due to internal short circuits.

Then, a battery using a metal composite oxide in place of a carbonaceous material for a negative electrode has been developed. Particularly, in a battery using a titanium oxide for a negative electrode, rapid charge-and-discharge can be stably performed. Such a battery also has a longer life than that of the battery using the carbon-based negative electrode.

However, the titanium oxide has a higher potential relative to metal lithium than that of the carbonaceous material. That is, the titanium oxide has a noble potential. In addition, the titanium oxide has a low capacity per weight. For this reason, the battery using the titanium oxide for the negative electrode disadvantageously has a lower energy density.

For example, the electrode potential of the titanium oxide is about 1.5 V (vs. Li/Li$^+$) based on metal lithium, which is higher (nobler) than the potential of the carbon-based negative electrode. The potential of the titanium oxide is due to a redox reaction between Ti$^{3+}$ and Ti$^{4+}$ when lithium is electrochemically inserted and extracted, and is therefore electrochemically limited. There is also the fact that the rapid charge-and-discharge of lithium ions is stably performed at a high electrode potential of about 1.5 V (vs. Li/Li$^+$). It is therefore difficult to reduce the potential of the electrode to improve the energy density.

Meanwhile, regarding the capacity per unit weight, the theoretical capacity of titanium dioxide (anatase structure) is about 165 mAh/g, and the theoretical capacity of a spinel type lithium titanium composite oxide such as $Li_4Ti_5O_{12}$ is also about 180 mAh/g. Meanwhile, the theoretical capacity of a general graphite-based electrode material is 385 mAh/g or more. As described above, the capacity density of the titanium oxide is significantly lower than that of the carbon-based negative electrode. This is because few sites for inserting lithium are present in the crystal structure of the titanium oxide, and lithium is easily stabilized in the structure, whereby the substantial capacity decreases.

In view of the above, a new electrode material containing Ti and Nb has been studied. A niobium-titanium composite oxide is expected to have a high charge-and-discharge capacity. A composite oxide represented by $TiNb_2O_7$ has a high theoretical capacity exceeding 380 mAh/g. The practical capacity of the electrode containing $TiNb_2O_7$ is about 260 mAh/g, which makes it necessary to increase the electrode density in order to improve the energy density of the battery. Meanwhile, an electrode having an increased electrode density has deteriorated input/output performance, which disadvantageously causes a shortened charge-and-discharge life.

BRIEF DESCRIPTION OF THE DRAWINGS

FIG. 1 is an enlarged view schematically showing a part of an image analysis result example of an active material of an approach.
FIG. 2 is a view schematically showing an image analysis result example of an active material of an approach.
FIG. 3 is a scanning electron microscope photograph showing an example of the surface of an electrode of an approach.

FIG. 4 is a schematic view showing the crystal structure of $Nb_2TiO_7$.

FIG. 5 is a schematic view showing the crystal structure of FIG. 4 from another direction.

FIG. 6 is a cross-sectional view schematically showing an example of a secondary battery according to an approach.

FIG. 7 is an enlarged cross-sectional view of a portion A of the secondary battery shown in FIG. 6.

FIG. 8 is a partially cutaway perspective view schematically showing another example of a secondary battery according to an approach.

FIG. 9 is an enlarged cross-sectional view of a portion B of the secondary battery shown in FIG. 8.

FIG. 10 is a perspective view schematically showing an example of a battery module according to an approach.

FIG. 11 shows an exploded perspective view schematically showing an example of a battery pack according to an approach.

FIG. 12 is a block view showing an example of an electric circuit of the battery pack shown in FIG. 11.

FIG. 13 is a cross-sectional view schematically showing an example of a vehicle according to an approach.

FIG. 14 is a view schematically showing another example of a vehicle according to an approach.

FIG. 15 is a transmission electron microscope photograph showing an example of a single particle.

FIG. 16 is a transmission electron microscope photograph showing an example of a secondary particle.

FIG. 17 is a scanning electron microscope photograph showing the surface of an active material-containing layer of an electrode of Comparative Example 1.

DETAILED DESCRIPTION

An object of an approach is to provide an active material capable of achieving an electrode capable of exhibiting excellent life performance, an electrode containing the active material, a secondary battery, a battery pack, and a vehicle.

According to one approach, an active material including particles containing a niobium-containing oxide is provided. The particles containing the niobium-containing oxide contain single particles having protruded parts and recessed parts. Three or more of the recessed parts satisfy the following formula (1).

$$0.1 \leq a/L \leq 0.5 \quad (1)$$

Here, L is a length of a tangent line in contact with a first protruded part and a second protruded part, and a is a maximum length of a perpendicular line from the tangent line to a recessed part defined by the first protruded part and the second protruded part.

According to another approach, an electrode containing the active material of the approach is provided. According to another approach, a secondary battery including the electrode containing the active material of the approach is provided.

According to another approach, a battery pack including the secondary battery according to the approach is provided.

According to another approach, a vehicle including the battery pack according to the approach is mounted is provided.

Hereinafter, the approaches will be described with reference to the drawings. The same reference numerals denote common portions throughout the approaches and overlapped description is not repeated. Each of these drawings is a typical view for descriptions and promotion of the understanding of the approach. Though there are parts different from an actual apparatus in shape, dimension and ratio, these structural designs may be properly changed taking the following descriptions and known technologies into consideration.

(First Approach)

According to a first approach, an active material is provided. The active material contains particles containing a niobium-containing oxide. The particles containing the niobium-containing oxide have a plurality of protruded parts and recessed parts. Three or more of the plurality of recessed parts satisfy the following formula (1). Here, a single particle containing a niobium-containing oxide having three or more recessed parts satisfying the formula (1) is referred to as a first single particle. The first single particle may contain only a niobium-containing oxide type crystal phase, or may contain other crystal phase than the niobium-containing oxide type crystal phase. Examples of the other crystal phase include a titanium oxide type crystal phase such as $TiO_2$. The other crystal phase may be present in a domain boundary part in the niobium-containing oxide type crystal phases.

$$0.1 \leq a/L \leq 0.5 \quad (1)$$

Here, L is the length of a tangent line in contact with a first protruded part and a second protruded part. a is a perpendicular length that is a maximum length of a perpendicular line from the tangent line to a recessed part defined by the first protruded part the second protruded part.

The active material of the approach can be applied to a positive electrode active material, a negative electrode active material or both the positive electrode active material and the negative electrode active material.

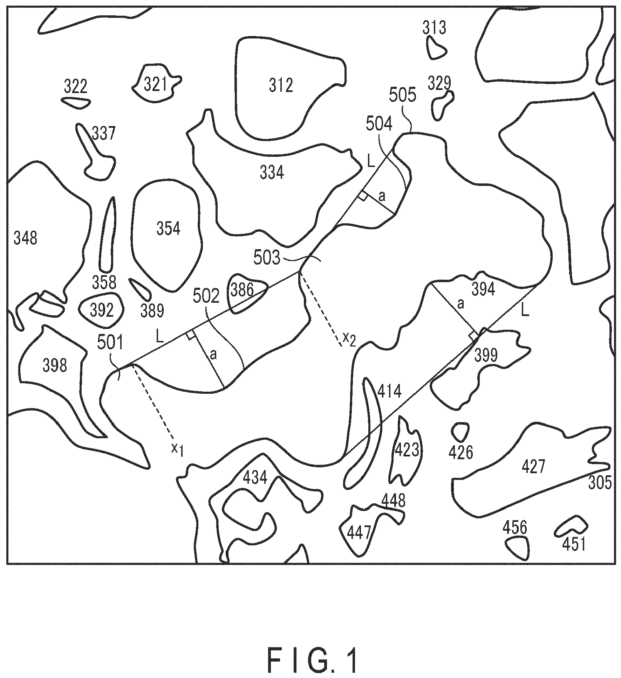

An example of the first single particle will be described with reference to FIG. 1. FIG. 1 is a schematic view showing a part of the active material of the approach. An image used to confirm the shape of the active material particle will be described in detail later. In FIG. 1, particles denoted by 312, 334, 354, 394, 399, and 427 and the like are single particles of a niobium-containing oxide such as a niobium-titanium composite oxide. The single particle may be a primary particle. A method for confirming whether the particle is the single particle will be described later.

The single particle denoted by 394 will be described as an example. The single particle 394 has a plurality of irregularities. a and L of the recessed part will be described in detail below. A certain protruded part is defined as a first protruded part 501, and a recessed part connected to the first protruded part 501 is defined as a first recessed part 502. A protruded part connected to the first recessed part 502 is defined as a second protruded part 503. Therefore, the first recessed part 502 is located between the first protruded part 501 and the second protruded part 503, and is defined by the first protruded part 501 and the second protruded part 503. It can also be said that the second protruded part 503 is located adjacent to the first protruded part 501 with the first recessed part 502 interposed therebetween. The length of a tangent line in contact with both the first protruded part 501 and the second protruded part 503 is defined as L. When a plurality of tangent lines are conceivable depending on the shape of the protruded part, the tangent line in contact with both the first protruded part 501 and the second protruded part 503 is desirably set to have a shorter length. Specifically, the tangent line is determined in the following manner. One tangent line (hereinafter, a tangent line $\alpha$) in contact with both the first protruded part 501 and the second protruded part 503 is drawn, and perpendicular lines x1 and x2 are respectively drawn from a contact point between the tangent line $\alpha$ and the first protruded part 501 and a contact point between the tangent line $\alpha$ and the second protruded part 503. A distance between the two perpendicular lines x1 and x2 is measured to obtain the length of the tangent line $\alpha$. When a plurality of tangent lines are conceivable depending on the shape of the protruded part, the lengths of the plurality of tangent lines are obtained from the measurement of the distance between the two perpendicular lines. The obtained values are compared with each other, and the value of a short distance is defined as the length L of the tangent line. Of the perpendicular lines from the tangent line, the length of the perpendicular line having the maximum distance from the first recessed part 502 is defined as a. a corresponds to the depth of the first recessed part 502, and L corresponds to the opening length of the first recessed part 502. A protruded part connected to a certain recessed part may be connected to another recessed part. This example will be described. The second protruded part 503 is also connected to a second recessed part 504. The second recessed part 504 is connected to another first protruded part 505. For this, the second recessed part 504 is located between the second recessed part 503 and the first protruded part 505, and is defined by the second protruded part 503 and the first protruded part 505. L is the length of a tangent line in contact with both the second protruded part 503 and the first protruded part 505. a is a perpendicular length at which a distance from the second protruded part 503 is maximized among perpendicular lines from the tangent line. As described above, a and L of the recessed part are determined. In the above description, for the sake of convenience, each of the protruded part 501 and the protruded part 505 is the first protruded part, and the protruded part 503 is the second protruded part. However, each of the protruded part 501 and the protruded part 505 may be the second protruded part, and the protruded part 503 may be the first protruded part.

When a/L is less than 0.1, the depth is smaller than the opening length of the recessed part. The particles containing the niobium-containing oxide are greatly expanded and shrunk due to the insertion and extraction of lithium ions, whereby the small depth of the recessed part makes it difficult to keep the electrolyte (for example, the electrolytic solution) in the recessed part. When a/L exceeds 0.5, the recessed part becomes deep, which makes it difficult to wet the bottom surface of the recessed part with the electrolyte. In order to enhance the electrolyte retaining property of the recessed part, a/L desirably satisfies the formula (1). In a single particle having one or two recessed parts in which a/L satisfies the formula (1), the surface in contact with the electrolyte is unevenly distributed, whereby lithium ion diffusion may not uniformly occur depending on the size of the single particle. In a single particle having three or more recessed parts in which a/L satisfies the formula (1), an appropriate amount of the electrolyte can be held in the recessed parts, and the deviation of the distribution of the surface in contact with the electrolyte can be reduced. For this, lithium ion diffusion can be uniformly generated regardless of the size of the single particle. The active material of the approach containing the first single particle may contain a single particle having two or less recessed parts in which a/L satisfies the formula (1) (referred to as a second single particle). The active material of the approach may contain a single particle having a recessed part in which a/L does not satisfy the formula (1) (referred to as a third single particle). a/L is preferably in a range of 0.10 to 0.50.

An example of the size of L is 0.1 $\mu$m to 2 $\mu$m.

As an attempt to increase the electrode capacity, the particle size is reduced, and the electrode density is improved. When the density of the electrode is increased in a state where the particle size is small, there is no gap between the particles in the electrode, whereby the contact area between the electrode and the electrolyte (for example, the electrolytic solution) tends to decrease. As a result, resistance when lithium ions migrate from the electrolyte to the active material increases, whereby input/output performance is poor. The volume of a niobium-containing oxide such as a niobium-titanium composite oxide is changed by repeated charge-and-discharge. When the contact area between the electrode and the electrolyte is small, the electrolyte in the particle gap is extruded to the outside due to the volume change of the niobium-containing oxide, whereby the life is reduced. Meanwhile, when the electrode density is reduced in order to increase the electrode gap, the retaining property of the electrolyte is improved, but the contact area between the particles is reduced, which causes an insufficient electron conduction network, resulting in reduced input/output performance and life, and the energy density of the electrode is also reduced.

The present inventors have focused on the shape of the primary particle of the niobium-containing oxide. Specifically, the particle containing the niobium-containing oxide contains the first single particle. The first single particle can hold the electrolyte in the recessed part even if the electrode density is increased to reduce the gap between the particles, whereby the migration of electrons and lithium ions between the active material particles is facilitated. This makes it possible to achieve a secondary battery capable of exhibiting a high energy density, excellent rapid charge-and-discharge performance, and long life performance.

The number of the recessed parts included in each of the first single particles is not particularly limited as long as it is three or more. The upper limit is, for example, 10 or less.

The particle containing the niobium-containing oxide may be formed of the first single particle, or may contain the second single particle, the third single particle, or the secondary particle of any one of the first to third single particles in addition to the first single particle.

When the first single particles are contained in the electrode, the number of the first single particles may be one or more, but the plurality of first single particles are desirably contained. The electrode desirably satisfies the following formula (2). The electrode will be described in detail in the second approach.

$$0.01 \leq n/N \leq 0.5 \quad (2)$$

Here, N is the total number of particles in a 20 $\mu$m-square region of the surface of the electrode, and n is the number of the first single particles in the 20 $\mu$m-square region.

By setting n/N to 0.01 or more, excellent rapid charge-and-discharge performance can be achieved by the amount of the electrolyte that can be held in the recessed part. When n/N is more than 0.5, there are many voids in the electrode, whereby a high energy density may not be obtained. When $0.01 \leq n/N \leq 0.5$ is set, an increase in volume can be absorbed by the recessed part in the electrode or the active material-containing layer even if the particle size increases with an increase in lattice constant. As a result, the peeling of the binder and the electro-conductive agent and the like from the active material particles can be suppressed, whereby the electrode according to the approach is also excellent in life performance. In other words, the electrode according to the approach can suppress the expansion and shrinkage of the active material-containing layer or the electrode caused by charge-and-discharge.

Examples of the niobium-containing oxide include niobium-titanium composite oxides. An example of the niobium-titanium composite oxides is $Nb_2TiO_7$. It is preferable that at least a part of the niobium-containing oxide has a crystal structure having symmetry of a space group C2/m and having atomic coordinates described in Non-Patent Literature 1 (M.Gasperin, Journal of Solid State Chemistry 53, pp144-147 (1984)), although the niobium-containing oxide is not limited thereto.

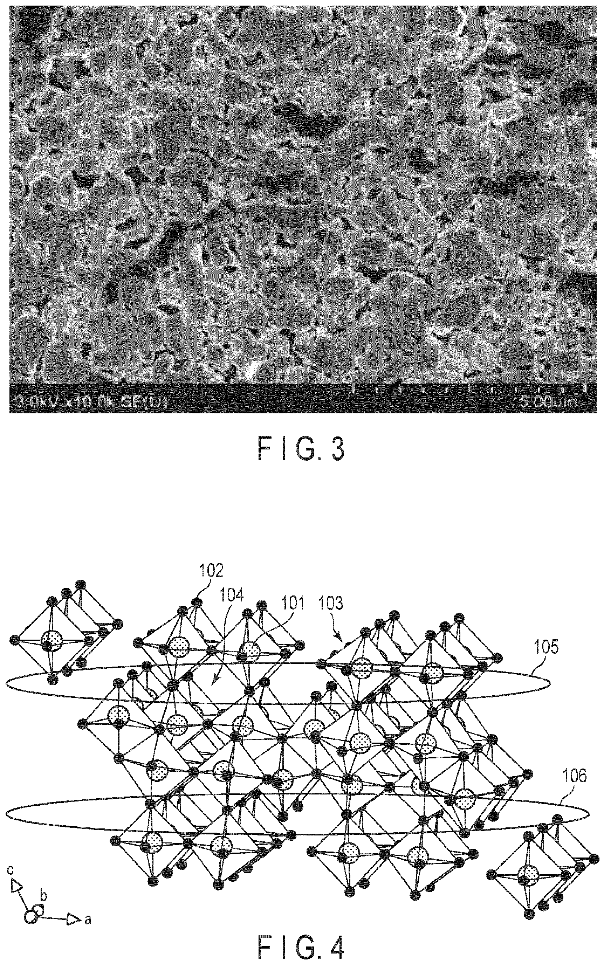

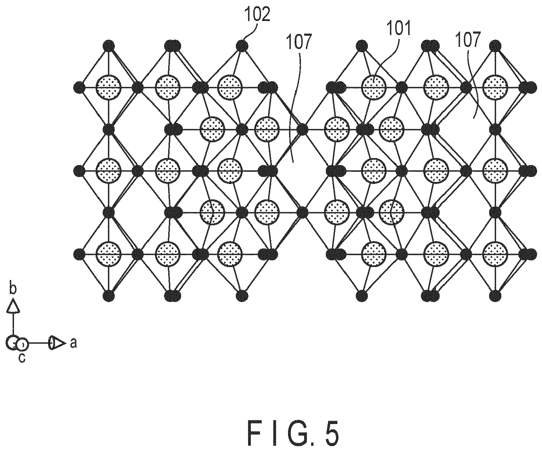

The niobium-containing oxide mainly exhibits a monoclinic crystal structure. As an example, schematic views of a crystal structure of monoclinic $Nb_2TiO_7$ are shown in FIGS. 4 and 5. FIG. 4 shows planes along the $\alpha$-axis direction and the c-axis direction of the crystal structure of the monoclinic $Nb_2TiO_7$. Meanwhile, FIG. 5 shows planes along the $\alpha$-axis direction and the b-axis direction of the crystal structure of the monoclinic $Nb_2TiO_7$.

As shown in FIG. 4, in the crystal structure of the monoclinic $Nb_2TiO_7$, a metal ion 101 and oxide ions 102 constitute a skeleton structure portion 103. Nb ions and Ti ions are randomly arranged in the location of the metal ion 101 at a ratio of Nb : Ti = 2 : 1. The skeleton structural portions 103 are three-dimensionally alternately arranged, whereby a void portion 104 is present between the skeleton structural portions 103. The void portion 104 serves as a host of lithium ions. The lithium ions can be inserted in an amount of 0 mol up to 5.0 mol into this crystal structure. A composition when the lithium ions are inserted in an amount of 5.0 mol can be expressed as $LisNb_2TiO_7$.

In FIG. 4, a region 105 and a region 106 are portions having two-dimensional channels in a [100] direction and a [010] direction. As shown in FIG. 5, a void portion 107 is present in a [001] direction in the crystal structure of the monoclinic $Nb_2TiO_7$. The void portion 107 has a tunnel structure advantageous for the conduction of the lithium ions, and serves as a conductive path connecting the region 105 and the region 106 in the [001] direction. The presence of the conductive path allows the lithium ions to move back and forth between the region 105 and the region 106.

Furthermore, in the above-mentioned crystal structure, when a lithium ion is inserted into the void portion 104, the metal ion 101 constituting the skeleton is reduced to trivalent, thereby maintaining the electrical neutrality of the crystal. In the niobium-titanium composite oxide, not only the Ti ion is reduced from tetravalent to trivalent, but also the Nb ion is reduced from pentavalent to trivalent. For this reason, the reduction valence per weight of the active material is large. Therefore, even when a large number of lithium ions are inserted, the electrical neutrality of the crystal can be maintained. For this reason, the niobium-titanium composite oxide has a higher energy density than that of a compound such as a titanium oxide containing only a tetravalent cation. The niobium-containing oxide has a lithium insertion potential of about 1.5 V (vs. Li/Li$^+$). Therefore, an electrode containing the niobium-containing oxide as an active material can achieve a battery capable of stable repeated rapid charge-and-discharge.

The niobium-containing oxide may be the niobium-titanium composite oxide. The niobium-titanium composite oxide may contain, for example, at least one crystal phase selected from the group consisting of $Nb_2TiO_7$, $Nb_2Ti_2O_9$, $Nb_{10}Ti_2O_{29}$, $Nb_{14}TiO_{37}$, and $Nb_{24}TiO_{62}$. The niobium-titanium composite oxide may be a substituted niobium-titanium composite oxide in which at least a part of Nb and/or Ti is substituted with a different element. Examples of the substitution element include Na, K, Ca, Co, Ni, Si, P, V, Cr, Mo, Ta, Zr, Mn, Fe, Mg, B, Pb, and Al. The substituted niobium-titanium composite oxide may contain one kind of substitution element, or two or more kinds of substitution elements. The active material particles may contain one kind of niobium-titanium composite oxide, or a plurality of kinds of niobium-titanium composite oxides. The niobium-titanium composite oxide preferably contains a monoclinic niobium-titanium composite oxide $Nb_2TiO_7$. In this case, as described above, an electrode having excellent capacity and rate performance can be obtained.

Examples of the monoclinic niobium-titanium composite oxide include a compound represented by $Li_xTi_{1-y}Ml_yNb_{2-z}M2_zO_{7+\delta}$. Here, M1 is at least one selected from the group consisting of Zr, Si, and Sn. M2 is at least one selected from the group consisting of V, Ta, and Bi. Subscripts in the composition formula satisfy $0 \leq x \leq 5$, $0 \leq y < 1$, $0 \leq z < 2$, and $-0.3 \leq \delta \leq 0.3$.

Other examples of the monoclinic niobium-titanium composite oxide include a compound represented by $Ti_{1-y}M3_{y+z}Nb_{2-z}O_{7-\delta}$. Here, M3 is at least one selected from Mg, Fe, Ni, Co, W, Ta, and Mo. Subscripts in the composition formula satisfy $0 \leq y < 1$, $0 \leq z < 2$, and $-0.3 \leq \delta \leq 0.3$.

The active material may contain only particles containing the niobium-containing oxide, or an active material other than the particles containing the niobium-containing oxide. The content of the particles containing the niobium-containing oxide in the active material is preferably in a range of 75% by weight to 100% by weight. The content of the particles containing the niobium-containing oxide in the active material is preferably closer to 100% by weight.

Examples of the active material (second active material) other than the niobium-containing oxide include lithium titanate having a ramsdellite structure (e.g., $Li_{2-y}Ti_3O_7$, $0 \leq y \leq 3$), lithium titanate having a spinel structure (e.g., $Li_{4+x}Ti_5O_{12}$, $0 \leq x \leq 3$), monoclinic titanium dioxide ($TiO_2(B)$), anatase titanium dioxide, rutile titanium dioxide, a hollandite titanium composite oxide, and an orthorhombic titanium-containing composite oxide.

Examples of the orthorhombic titanium-containing composite oxide include a compound represented by $Li_{2+a}M(I)_{2-b}Ti_{6-c}M(II)_dO_{14+\sigma}$. Here, the M(I) is at least one selected from the group consisting of Sr, Ba, Ca, Mg, Na, Cs, Rb, and K. The M(II) is at least one selected from the group consisting of Zr, Sn, V, Nb, Ta, Mo, W, Y, Fe, Co, Cr, Mn, Ni, and Al. Subscripts in the composition formula satisfy $0 \leq a \leq 6$, $0 \leq b < 2$, $0 \leq c < 6$, $0 \leq d < 6$, and $-0.5 \leq \sigma \leq 0.5$. Specific examples of the orthorhombic titanium-containing composite oxide include $Li_{2+a}Na_2Ti_6O_{14}$ ($0 \leq a \leq 6$).

When the active material further contains the monoclinic titanium dioxide, there is a tendency that the charge-and-discharge rate performance can be improved because the electron conductivity is improved as Li ions are inserted, or the electrode density can be increased by reducing the electro-conductive agent in the electrode.

The average particle size (D50) of the particles containing the niobium-containing oxide is preferably in a range of 0.5 $\mu$m to 6 $\mu$m, and more preferably in a range of 0.5 $\mu$m to 2 $\mu$m. By setting the average particle size (D50) to 0.5 $\mu$m or more, the electrode density is increased, whereby the contact area between the active material particles in the electrode and the contact area between the active material particles and the conductive agent can be improved to improve the life performance. The reaction between the particles containing the niobium-containing oxide and the electrolyte can be suppressed, whereby the rapid charge-and-discharge performance can be improved by setting the average particle size (D50) to 6 $\mu$m or less, the diffusion distance of the Li ions in the solid can be adjusted to improve the rapid charge-and-discharge performance. A method for measuring the average particle size (D50) will be described later.

The BET specific surface area of the particles containing the niobium-containing oxide is not particularly limited, but is preferably 0.1 m$^2$/g or more and less than 100 m$^2$/g. When the specific surface area is 0.1 m$^2$/g or more, the contact area between the electrolyte and the particles containing the niobium-containing oxide can be secured, whereby good discharge rate performance is easily obtained, and the charge time can be shortened. Meanwhile, when the specific surface area is less than 100 m$^2$/g, the reactivity of the particles containing the niobium-containing oxide with the electrolyte is not excessively increased, whereby the life performance can be improved. When the specific surface area is less than 100 m$^2$/g, the coatability of the slurry containing the active material used for producing the electrode described later can be improved.

The crystallite size of the particles containing the niobium-containing oxide is, for example, in a range of 50 nm to 200 nm, and preferably in a range of 80 nm to 120 nm. When the crystallite size is within this range, Li ion conduction in the crystal smoothly proceeds, whereby charge-and-discharge efficiency and rate performance can be improved.

The active material can be produced by the following method.

First, starting materials are mixed. As the starting material for a niobium-titanium composite oxide as a niobium-containing oxide, an oxide or a salt containing Li, Ti, or Nb is used. The salt used as the starting material is preferably a salt that decomposes at a relatively low temperature to produce an oxide, such as a carbonate and a nitrate. The particle sizes of these starting materials are preferably in a range of 0.1 $\mu$m to 10 $\mu$m, and more preferably in a range of 0.1 $\mu$m to 5 $\mu$m. This is because when the particle size is less than 0.1 $\mu$m, the starting materials easily fly in the atmosphere during mixing, which is apt to cause composition deviation to occur. When the particle size is more than 10 $\mu$m, an unreacted product is generated.

When the starting materials are mixed, a Nb source and a Ti source are mixed at a molar ratio so as to provide a target composition. The mixing is performed by, for example, a dry ball mill. The mixed raw materials are subjected to pre-firing at a temperature in a range of 500°C to 1000°C for about 2 hours to 24 hours. Next, the pre-fired powder is placed in distilled water and subjected to wet bead milling. At this time, water-soluble potassium and phosphorus raw materials such as potassium chloride or diammonium hydrogen phosphate are added in a total concentration range of 10 ppm to 2500 ppm. The added raw material functions as a flux on the surface of the particles, and thus the particles are easily bound to each other to form primary particles. Next, the mixture obtained by the wet bead mill is spray-dried using a spray dryer. The obtained granulated body is subjected to main firing to bind the particles to each other to form primary particles. The main firing is performed at a temperature of 1000°C to 1450°C in 2 or more firing steps over a total period of 10 hours to 40 hours. After the main firing, it is preferable to further perform an annealing treatment at a temperature equal to or lower than the temperature during the main firing. The annealing treatment is performed by performing a heat treatment at a temperature of 450°C to 800°C for 1 hour to 5 hours. By performing the annealing treatment, the crystal domain of the bonded part of the particles is made uniform, whereby a high capacity and excellent life performance can be achieved.

The fired powder is quickly taken out from the electric furnace to be cooled to room temperature. This cooling is preferably performed under the condition that the temperature of the fired product is 100°C or lower within 1 hour from the temperature during firing.

As described above, the growth of primary particles can be suppressed by performing firing twice or more of pre-firing and main firing instead of mixing starting materials at a target composition ratio from the beginning and performing firing once. This is because, when firing is performed once at the mixing ratio of the target composition from the beginning, the process proceeds from particle necking to particle growth in a firing reaction at one time, but the particle growth can be suppressed by performing firing twice or more, and even if particles are bonded by main firing after granulation by spray drying, coarse particles are less likely to be formed.

Lithium ions may be inserted into the niobium-titanium composite oxide synthesized by the above method by charging a battery. Alternatively, as described above, a composite oxide containing lithium may be synthesized by using a compound containing lithium such as lithium carbonate as a starting material.

The active material of the first approach contains particles containing a niobium-containing oxide containing single particles having an irregularity shape having three or more recessed parts satisfying $0.1 \leq a/L \leq 0.5$. This makes it possible to achieve a secondary battery capable of exhibiting a high energy density, excellent rapid charge-and-discharge performance, and long life performance.

Hereinafter, a method for measuring the (a/L) ratio and the like of the active material of the approach will be described.

<Observation of Particle Shape>

First, a method for photographing a scanning electron microscope image on the surface of an electrode for active material particles in an electrode active material-containing layer will be described.

When active material particles contained in a battery are to be measured, an active material is taken out from the battery by the following procedure.

First, the battery is completely discharged. By discharging the battery to a rated final voltage at a current of 0.1 C in an environment of 25°C, the battery can be brought into a discharged state.

Next, the battery is disintegrated in a glove box filled with argon, and an electrode body (alternatively, an electrode group) is taken out. The electrode body is washed with an appropriate solvent and dried under reduced pressure at 60°C for 12 hours. As the washing solvent, for example, ethyl methyl carbonate or the like can be used. Thus, an organic electrolyte contained in the electrode body can be removed. Next, two electrode pieces are obtained by cutting an electrode. One of the cut electrode pieces is immersed in a solvent (preferably an organic solvent such as a solvent (alcohol, N-methyl-2-pyrrolidone (NMP)), and an ultrasonic wave is applied. As a result, the current collector and the electrode constituent material contained in the electrode body can be separated from each other. Next, the solvent in which the electrode constituent material is dispersed is subjected to a centrifugal separator to separate the active material particles from the powder of the electrode body containing the conductive agent such as carbon.

Subsequently, a method for measuring the particle size distribution of the active material particles prepared as described above will be described.

By subjecting the active material powder to particle size distribution measurement by a laser diffraction scattering method, the average particle size (D50) of the niobium-containing oxide particles can be determined from the cumulative frequency curve of the active material particles. As a laser diffractometer, for example, MT3000II manufactured by MicrotracBEL Corp. can be used.

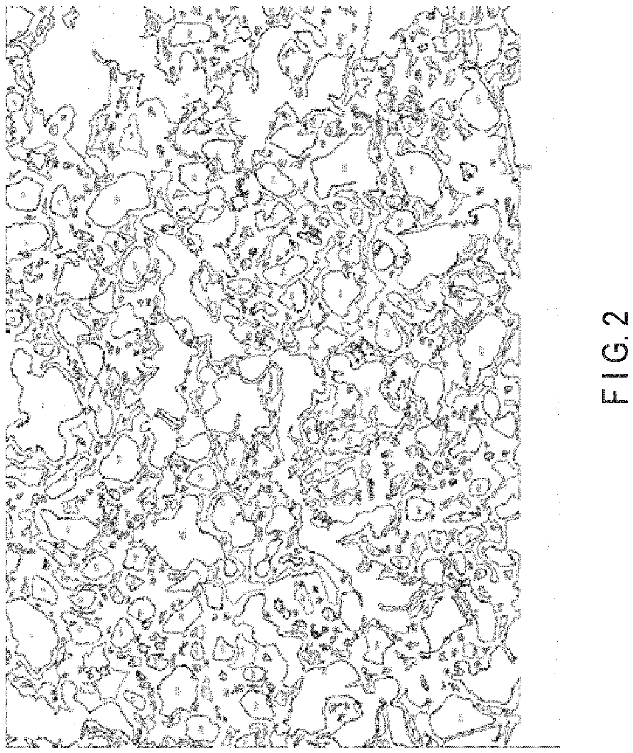

Next, the shape of the other electrode piece is observed by observing a scanning electron microscope (SEM) image. The electrode piece with the active material powder is stuck to a stage for SEM with a carbon tape, and observed at a magnification of, for example, 5000 times to 20,000 times. An example of the obtained SEM image is shown in FIG. 3. Image analysis results are obtained from the SEM image using an image analysis tool. As the image analysis tool, for example, ImageJ described in Non-Patent Literature 2 (Dr. Michael et al., Image Processing with ImageJ, Reprinted from the July 2004 issue of Biophotonics International copyrighted by Laurin Publishing Co. INC.) can be used. FIG. 2 schematically shows an example of the analysis results of the SEM image by ImageJ. FIG. 1 is a schematic view in which a part of the SEM image analysis results shown in FIG. 2 is enlarged.

In the measurement of a/L of the recessed part of the single particle and the ratio (n/N) of the number of the first single particles, among the analysis results of the SEM image of the surface of the active material-containing layer in the electrode piece, the image analysis result for a target region defined by a 20 $\mu$m square on the surface is used. a and L of the irregularity shape of each of the particles indicated in the image analysis result are measured using the image analysis tool, and a/L is calculated. The presence or absence of the first single particle is determined using the calculation result. Note that a method for determining a and L is as described above.

Regarding the (n/N) ratio, the total number of particles indicated in the image analysis result of the SEM image of the target region is calculated as N, and the number of the first single particles is calculated as n.

<Confirmation of Primary Particles>

Whether target particles are primary particles or secondary particles such as aggregated particles can be determined using a transmission electron microscope (TEM). When a portion that looks like a bonded part formed by bonding particles is observed, and a line that is a boundary of the particles is clearly observed in the portion that looks like the bonded part, the particles can be regarded as the secondary particles. When no boundary line is observed in the portion that looks like the bonded part, or lattice images are continuous, the particles can be regarded as bonded primary particles, that is, single particles.

<Confirmation of Crystal Structure of Active Material>

The crystal structure of the active material can be confirmed, for example, by combining powder X-ray diffraction (XRD) measurement and analysis by the Rietveld method.

The powder X-ray diffraction measurement of the active material can be performed, for example, as follows.

First, the active material is pulverized as necessary to prepare a sample having an average particle size of less than about 5 $\mu$m. The average particle size can be obtained by the laser diffraction method. The obtained sample is filled in a holder portion formed on a glass sample plate and having a depth of 0.2 mm. Then, another glass plate is pressed from the outside to flatten the surface of the filled sample. Care should be taken to fill the sample in a proper amount so that cracks, voids, and irregularities and the like do not occur in the filled sample. Also, note that the glass plate is pressed with a sufficient pressure. Then, the glass plate filled with the sample is set in a powder X-ray diffractometer to obtain an XRD pattern using Cu-K$\alpha$ rays.

When the orientation of the sample is high, the position of the peak may be shifted or the peak intensity ratio may be changed depending on how the sample is filled. Such a sample having a remarkably high orientation is measured using a capillary. Specifically, the sample is inserted into the capillary, and the capillary is placed on a rotary sample table for measurement. By such a measurement method, the orientation can be relaxed. The capillary to be used is made of Lindemann glass.

The active material contained in the battery as the electrode material can be measured as follows. First, lithium ions are completely separated from the active material (for example, niobium-titanium composite oxide) in the electrode material. For example, when this active material is used for the negative electrode, the battery is completely discharged. As a result, the crystalline state of the active material can be observed. Remaining lithium ions may be present even in the discharged state. Due to the influence of the lithium ions remaining in the electrode, impurity phases lithium carbonate and lithium fluoride may be mixed in the powder X-ray diffraction measurement results. The contamination of the impurity phases can be prevented, for example, by setting the measurement atmosphere to an inert gas atmosphere or washing the surface of the electrode. Even if the impurity phases are present, these phases can be disregarded for analysis.

Next, the battery is disintegrated in a glove box filled with argon, and an electrode is taken out. The taken-out electrode is washed with an appropriate solvent. For example, ethyl methyl carbonate or the like can be used. The washed electrode is cut into an area almost equal to the area of the holder of the powder X-ray diffractometer to obtain a measurement sample.

The cut sample (electrode) is directly affixed to the glass holder for measurement. In this case, the position of a peak derived from an electrode substrate such as a metal foil is previously measured. The peaks of other components such as a conductive agent and a binder are also previously measured. When the peaks of the substrate and active material overlap, it is desirable that the layer containing the active material (e.g., the below-described active material-containing layer) is peeled off from the substrate, and subjected to measurement. This is because the overlapping peaks are separated when the peak intensity is quantitatively measured. For example, the active material layer can be peeled off by irradiating the electrode substrate with an ultrasonic wave in a solvent. The active material layer is sealed into the capillary, and the capillary is placed on a rotary sample table for measurement. By such a method, the XRD pattern of the active material can be obtained with the influence of the orientation reduced. The XRD pattern obtained at this method should be applicable to Rietveld analysis. In order to collect Rietveld data, a measurement time and/or X-ray intensity are appropriately adjusted so that a step width is 1/3 to 1/5 of the minimum half width of diffraction peaks, and the intensity at the peak position of highest reflected intensity is 5,000 to 10,000 counts.

The XRD pattern obtained is analyzed by the Rietveld method. In the Rietveld method, a diffraction pattern is calculated from a crystal structure model which has been previously estimated. Parameters (lattice constants, atomic coordinates, and occupancy and the like) related to the crystal structure can be precisely analyzed by fitting all the calculated values and measured values. As a result, the characteristics of the crystal structure of the synthesized oxide can be examined. The occupancies in the sites of the respective constitutional elements can be examined.

<Method for Confirming Composition of Active Material>

The composition of the active material can be analyzed using inductively coupled plasma (ICP) emission spectrography, for example. At this time, the abundance ratio (molar ratio) of each element depends on the sensitivity of an analyzing apparatus to be used. Therefore, the measured molar ratio may deviate from the actual molar ratio by an error of the measurement apparatus. However, when the numerical value deviates from the actual value and falls within the error range of the analyzing apparatus, the performance of the active material according to the approach can be sufficiently exhibited.

In order to measure the composition of the active material included in the battery according to ICP emission spectrography, the following procedure is specifically performed.

First, according to the procedure described in the section of powder X-ray diffraction, an electrode containing an active material to be measured is taken out from a secondary battery, and washed. A portion containing the electrode active material, such as the active material-containing layer, is peeled off from the washed electrode. For example, the portion containing the electrode active material can be peeled off by irradiation with an ultrasonic wave. As a specific example, for example, the active material-containing layer containing the electrode active material can be peeled off from an electrode current collector by placing an electrode in ethyl methyl carbonate placed in a glass beaker and vibrating the electrode in an ultrasonic washer.

Next, the peeled portion is heated in the atmosphere for a short time (for example, about 1 hour at 500°C) to burn off unnecessary components such as a binder component and carbon. By dissolving this residue with an acid, a liquid sample containing the active material can be produced. At this time, hydrochloric acid, nitric acid, sulfuric acid, and hydrogen fluoride and the like can be used as the acid. The composition in the active material can be known by subjecting the liquid sample to ICP analysis.

<Method for Measuring Specific Surface Area of Active Material Particles>

The specific surface area of the active material particles can be measured by a method in which a molecule whose the adsorption occupancy area is known is adsorbed on the surface of the particles at a temperature of liquid nitrogen, and the specific surface area of the sample is determined from the amount of the molecule. A method which is most frequently used to obtain the specific surface area is the BET method. The BET method uses the low-temperature and low-humidity physical adsorption of an inert gas and is based on the well-known theory for the calculating specific surface area. The theory is obtained by extending the Langmuir theory which is monolayer adsorption theory to multilayer adsorption. The specific surface area calculated in this manner is referred to as the "BET specific surface area".

(Second Approach)

An electrode according to a second approach will be described.

The electrode includes an active material-containing layer containing the active material of the approach. The electrode can further include a current collector. The current collector may be sheet-shaped. The active material-containing layer may be formed on one or both of surfaces of the current collector. The active material-containing layer can optionally contain an electro-conductive agent and a binder in addition to the active material. The electrode is, for example, a battery electrode or a secondary battery electrode. The electrode may be a negative electrode containing the active material of the approach as a negative electrode active material.

The conductive agent is blended in order to enhance current collection performance and to suppress contact resistance between the active material and the current collector. Examples of the conductive agent include vapor grown carbon fiber (VGCF), carbon black such as acetylene black, and a carbonaceous substance such as graphite. One of these may be used as the conductive agent, or two or more thereof may be used in a combination as the conductive agent. Alternatively, in place of using the conductive agent, a carbon coating or an electron conductive inorganic material coating may be applied to the surface of the active material particles.

The binder is blended to fill gaps of the active materials and also to bind the active material with the current collector. Examples of the binder include polytetrafluoro ethylene (PTFE), polyvinylidene fluoride (PVdF), fluororubber, styrene-butadiene rubber, a polyacrylic acid compound, an imide compound, carboxymethyl cellulose (CMC), and salts of CMC. One of these may be used as the binder, or two or more thereof may be used in a combination as the binder.

As the current collector, a material that is electrochemically stable at a potential at which lithium (Li) is inserted into and extracted from the active material is used. For example, when the electrode is used as a negative electrode, the current collector is preferably made of copper, nickel, stainless steel, aluminum, or an aluminum alloy containing one or more elements selected from Mg, Ti, Zn, Mn, Fe, Cu, and Si. The thickness of the current collector is preferably 5 $\mu$m to 20 $\mu$m. The current collector having such a thickness can keep a balance between the strength and weight reduction of the electrode.

The current collector may include a portion where the active material-containing layer is not formed on the surface thereof. This portion can function as a collector tab.

The density of the active material-containing layer (not including the current collector) is preferably in a range of 2 g/cm$^3$ to 3 g/cm$^3$. The density of the active material-containing layer can also be referred to as an electrode density. When the electrode density is within this range, active material particles and an electro-conductive agent appropriately adhere to each other, whereby a balance between the formation of an electron conductive path in the electrode and electrolyte permeability is improved, and thus rapid charge-and-discharge performance and life performance are improved. Here, when the electrode density is excessively high, fine particles enter the recessed parts of the first single particles, whereby the electrolyte may hardly permeate. There is a possibility that the volume fluctuation of the active material due to charge-and-discharge cannot be absorbed, leading to deterioration in life performance. The electrode density is more preferably in a range of 2.3 g/cm$^3$ to 3 g/cm$^3$.

Using the active material particles of the approach, an electrode is produced by, for example, the following method. First, an active material, a conductive agent, and a binder are suspended in a solvent to prepare a slurry. This slurry is applied to one surface or both surfaces of a current collector. Then, the applied slurry is dried to obtain a stack of the current collector and active material-containing layer. Thereafter, the stack is pressed. Thus, the electrode is produced.

Alternatively, the electrode may be produced by the following method. First, an active material, a conductive agent, and a binder are mixed to obtain a mixture. Then, the mixture is formed into pellets. Then, by placing the pellets on a current collector, the electrode can be obtained.

The electrode according to the approach contains the active material of the approach. Therefore, even when the electrode density is increased, the electrolyte retaining property is high, whereby not only the high energy density and the rapid charge-and-discharge performance can be improved, but also the volume change of the active material particles associated with charge-and-discharge can be absorbed, and the life performance can be improved.

(Third Approach)

According to a third approach, a secondary battery including a negative electrode, a positive electrode, and an electrolyte is provided. The secondary battery includes the electrode according to the second approach as the positive electrode or the negative electrode.

The secondary battery can further include a separator disposed between the positive electrode and the negative electrode. The positive electrode, the negative electrode, and the separator can constitute an electrode group. The electrolyte may be held in the electrode group. The secondary battery can further include a container member that houses the electrode group and the electrolyte. The secondary battery can further include a negative electrode terminal electrically connected to the negative electrode and a positive electrode terminal electrically connected to the positive electrode.

The secondary battery may be, for example, a lithium ion secondary battery. The secondary battery includes a nonaqueous electrolyte secondary battery containing a nonaqueous electrolyte.

Hereinafter, the negative electrode, the positive electrode, the electrolyte, the separator, the container member, the negative electrode terminal, and the positive electrode terminal will be described in detail. The following example is an example in which the electrode of the approach is applied to the negative electrode.

(1) Negative Electrode

The negative electrode may be the electrode according to the approach.

(2) Positive Electrode

The positive electrode can include a positive electrode current collector and a positive electrode active material-containing layer. The positive electrode active material-containing layer may be formed on one or each of both of surfaces of the positive electrode current collector. The positive electrode active material-containing layer can contain a positive electrode active material, and optionally an electro-conductive agent and a binder.

As the positive electrode active material, for example, an oxide or a sulfide can be used. The positive electrode may contain one kind of compound singly or two or more kinds of compounds in a combination as the positive electrode active material. Examples of the oxide and sulfide include a compound capable of inserting in and extracting from Li or Li ions.

Examples of such a compound include manganese dioxide ($MnO_2$), iron oxide, copper oxide, nickel oxide, lithium manganese composite oxides (e.g., $Li_xMn_2O_4$ or $Li_xMnO_2$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese cobalt composite oxides (e.g., $Li_xMn_yCo_{1-y}O_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium phosphorus oxides having an olivine structure (e.g., $Li_xFePO_4$; $0 < x \leq 1$, $Li_xFe_{1-y}Mn_yPO_4$; $0 < x \leq 1$, $0 < y < 1$, $Li_xCoPO_4$; $0 < x \leq 1$), iron sulfate ($Fe_2(SO_4)_3$), vanadium oxide (e.g., $V_2O_5$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$).

Among the above, examples of the compound more preferable as the positive electrode active material include lithium manganese composite oxides having a spinel structure (e.g., $Li_xMn_2O_4$; $0 < x \leq 1$), lithium nickel composite oxides (e.g., $Li_xNiO_2$; $0 < x \leq 1$), lithium cobalt composite oxides (e.g., $Li_xCoO2$; $0 < x \leq 1$), lithium nickel cobalt composite oxides (e.g., $Li_xNi_{1-y}Co_yO_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium manganese cobalt composite oxides (e.g., $Li_xMn_yCo_{1-y}O_2$; $0 < x \leq 1$, $0 < y < 1$), lithium iron phosphate (e.g., $Li_xFePO_4$; $0 < x \leq 1$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$). When these compounds are used for the positive electrode active material, the positive electrode potential can be increased.

When a room-temperature molten salt is used as the electrolyte of the battery, the positive electrode active material containing lithium iron phosphate, $Li_xVPO_4F$ ($0 \leq x \leq 1$), lithium manganese composite oxides, lithium nickel composite oxides, lithium nickel cobalt composite oxides, or mixtures thereof is preferably used. Since these compounds have low reactivity for room-temperature molten salts, they can improve the cycle life. The room-temperature molten salt will be described in detail later.

The primary particle size of the positive electrode active material is preferably 100 nm to 1 pm. The positive electrode active material having a primary particle size of 100 nm or more is easy to handle during industrial production. The positive electrode active material having a primary particle size of 1 $\mu$m or less can smoothly diffuse lithium ions within the solid.

The specific surface area of the positive electrode active material is preferably 0.1 $m^2/g$ to 10 $m^2/g$. The positive electrode active material having a specific surface area of 0.1 $m^2/g$ or more can secure sufficient insertion and extraction sites for lithium ions. The positive electrode active material having a specific surface area of 10 $m^2/g$ or less is easy to handle during industrial production, and can secure good charge-and-discharge cycle performance.

The binder is blended to fill gaps of the dispersed positive electrode active materials and also to bind the positive electrode active material with the positive electrode current collector. Examples of the binder include polytetrafluoro ethylene (PTFE), polyvinylidene fluoride (PVdF), fluororubber, a polyacrylic acid compound, an imide compound, carboxymethyl cellulose (CMC), and salts of CMC. One of these may be used as the binder, or two or more thereof may be used in a combination as the binder.

The conductive agent is blended to improve current collection performance and to suppress the contact resistance between the positive electrode active material and the positive electrode current collector. Examples of the conductive agent include vapor grown carbon fiber (VGCF), carbon black such as acetylene black, and carbonaceous materials such as graphite. One of these may be used as the conductive agent, or two or more thereof may be used in a combination as the conductive agent. The conductive agent can also be omitted.

In the positive electrode active material-containing layer, the positive electrode active material and the binder are preferably blended at ratios of 80% by weight to 98% by weight and 2% by weight to 20% by weight, respectively.

By setting the amount of the binder to 2% by weight or more, sufficient electrode strength is obtained. The binder can function as an insulator. For this, when the amount of the binder is 20% by weight or less, the amount of the insulator contained in the electrode is reduced, whereby the internal resistance can be reduced.

When a conductive agent is added, the positive electrode active material, the binder, and the conductive agent are preferably blended at ratios of 77% by weight to 95% by weight, 2% by weight to 20% by weight, and 3% by weight to 15% by weight, respectively.

When the amount of the conductive agent is 3% by weight or more, the above-described effects can be exhibited. When the amount of the conductive agent is 15% by weight or less, the proportion of the conductive agent in contact with the electrolyte can be reduced. When this proportion is low, decomposition of the electrolyte can be reduced during storage at high temperatures.

The positive electrode current collector is preferably an aluminum foil or an aluminum alloy foil containing at least one element selected from Mg, Ti, Zn, Ni, Cr, Mn, Fe, Cu, and Si.

The thickness of the aluminum foil or aluminum alloy foil is preferably 5 $\mu$m to 20 $\mu$m, and more preferably 15 $\mu$m or less. The purity of the aluminum foil is preferably 99% by weight or more. The content of the transition metals such as iron, copper, nickel, and chromium contained in the aluminum foil or the aluminum alloy foil is preferably 1% by weight or less.

The positive electrode current collector may include a portion where the positive electrode active material-containing layer is not formed on the surface thereof. This portion can function as a positive electrode tab. The positive electrode can be produced, for example, by the following method. First, an active material, a conductive agent, and a binder are suspended in a solvent, to prepare a slurry. This slurry is applied to one surface or both surfaces of a current collector. Then, the applied slurry is dried to obtain a stack of the current collector and active material-containing layer. Thereafter, the stack is pressed. Thus, the positive electrode is produced.

Alternatively, the positive electrode may be produced by the following method. First, an active material, a conductive agent, and a binder are mixed to obtain a mixture. Then, the mixture is formed into pellets. Then, by placing the pellets on a current collector, the positive electrode can be obtained.

(3) Electrolyte

As the electrolyte, a liquid nonaqueous electrolyte or a gel nonaqueous electrolyte may be used. The liquid nonaqueous electrolyte is prepared by dissolving an electrolyte salt as a solute in an organic solvent. The concentration of the electrolyte salt is preferably 0.5 mol/L to 2.5 mol/L.

Examples of the electrolyte salt include lithium salts such as lithium perchlorate (LiClO$_4$), lithium hexafluoro-phosphate (LiPF$_6$), lithium tetrafluoroborate (LiBF$_4$), lithium hexafluoroarsenate (LiAsF$_6$), lithium trifluorometasulfonate (LiCF$_3$SO$_3$), and lithium bistrifluoromethylsulfonylimide [LiN(CF$_3$SO$_2$)$_2$] , and mixtures thereof. The electrolyte salt is preferably less likely to be oxidized even at high potentials, and LiPF$_6$ is most preferred.

Examples of the organic solvent include cyclic carbonates such as propylene carbonate (PC), ethylene carbonate (EC), and vinylene carbonate (VC); chain carbonates such as diethyl carbonate (DEC), dimethyl carbonate (DMC), and methyl ethyl carbonate (MEC); cyclic ethers such as tetrahydrofuran (THF), 2-methyl tetrahydrofuran (2MeTHF), and dioxolane (DOX); chain ethers such as dimethoxy ethane (DME) and diethoxy ethane (DEE); and $\gamma$-butyrolactone (GBL), acetonitrile (AN) and sulfolane (SL). These organic solvents can be used alone or as a mixed solvent.

The gel nonaqueous electrolyte is prepared by combining a liquid nonaqueous electrolyte and a polymeric material. Examples of the polymeric material include polyvinylidene fluoride (PVdF), polyacrylonitrile (PAN), polyethylene oxide (PEO), or mixtures thereof.

Alternatively, as the nonaqueous electrolyte, a room-temperature molten salt (ionic melt) containing lithium ions, a polymer solid electrolyte, and an inorganic solid electrolyte and the like may be used instead of the liquid nonaqueous electrolyte and the gel nonaqueous electrolyte, or in addition to the liquid nonaqueous electrolyte and the gel nonaqueous electrolyte.

The room-temperature molten salt (ionic melt) is a compound which is an organic salt containing a combination of an organic cation and an organic anion, and can exist as a liquid by itself at room temperature (15 to 25°C). The room-temperature molten salt includes a room-temperature molten salt which exists alone as a liquid, a room-temperature molten salt which becomes a liquid after being mixed with an electrolyte salt, a room-temperature molten salt which becomes a liquid after being dissolved in an organic solvent, or mixtures thereof. In general, the melting point of the room-temperature molten salt used in secondary batteries is 25°C or lower. The organic cations generally have a quaternary ammonium skeleton.

The polymer solid electrolyte is prepared by dissolving an electrolyte salt in a polymeric material, and solidifying the solution.

The inorganic solid electrolyte is a lithium ion conductive solid substance.

(4) Separator

The separator is formed of, for example, a porous film containing polyethylene (PE), polypropylene (PP), cellulose, or polyvinylidene fluoride (PVdF), or a synthetic resin nonwoven fabric. From the viewpoint of safety, it is preferable to use a porous film formed of polyethylene or polypropylene. This is because these porous films can be melted at a designed temperature to break the current.

(5) Container Member

As the container member, for example, a container made of a laminated film, or a metal container can be used.

The thickness of the laminated film is, for example, 0.5 mm or less, and preferably 0.2 mm or less.

As the laminated film, a multilayer film including resin layers and a metal layer interposed between the resin layers is used. The resin layer contains, for example, polymeric materials such as polypropylene (PP), polyethylene (PE), nylon, and polyethylene terephthalate (PET). The metal layer is preferably made of an aluminum foil or an aluminum alloy foil for reducing the weight. The laminated film may be heat-sealed to be formed into the shape of the container member.

The thickness of the wall of the metal container is, for example, 1 mm or less, more preferably 0.5 mm or less, and still more preferably 0.2 mm or less.

The metal container is made of, for example, aluminum or an aluminum alloy or the like. The aluminum alloy preferably contains elements such as magnesium, zinc, and silicon. When the aluminum alloy contains transition metals such as iron, copper, nickel, and chromium, the content thereof is preferably 100 ppm by weight or less.

The shape of the container member is not particularly limited. The shape of the container member may be, for example, a flat shape (thin shape), a square shape, a cylindrical shape, a coin shape, or a button shape or the like. The container member can be appropriately selected according to the size of the battery and the application of the battery.

(6) Negative Electrode Terminal

The negative electrode terminal may be made of a material which is electrochemically stable at the potential at which Li or Li ions is inserted in and extracted from the negative electrode active material , and has electrical conductivity. Specifically, examples of the material of the negative electrode terminal include copper, nickel, stainless steel, aluminum, or an aluminum alloy containing at least one element selected from the group consisting of Mg, Ti, Zn, Mn, Fe, Cu, and Si. As a material of the negative electrode terminal, aluminum or an aluminum alloy is preferably used. The negative electrode terminal is preferably made of the same material as that of the negative electrode current collector in order to reduce contact resistance to the negative electrode current collector.

(7) Positive Electrode Terminal

The positive electrode terminal can be formed of a material which is electrically stable in a potential range of 3 V to 5 V with respect to the oxidation-reduction potential of lithium (vs. Li/Li$^+$) and has electrical conductivity. Examples of the material of the positive electrode terminal include aluminum, or an aluminum alloy containing at least one element selected from the group consisting of Mg, Ti, Zn, Mn, Fe, Cu, and Si. The positive electrode terminal is preferably made of the same material as that of the positive electrode current collector in order to reduce contact resistance to the positive electrode current collector.

Next, a secondary battery according to an approach will be more specifically described with reference to the drawings.

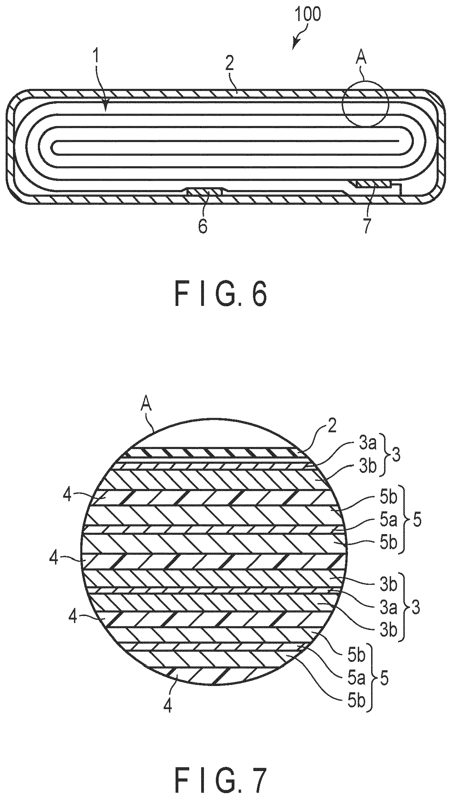

FIG. 6 is a cross-sectional view schematically showing an example of the secondary battery according to the approach. FIG. 7 is an enlarged cross-sectional view of a portion A of the secondary battery shown in FIG. 6.

A secondary battery 100 shown in FIGS. 6 and 7 includes a bag-shaped container member 2 shown in FIGS. 6 and 7, an electrode group 1 shown in FIG. 6, and an electrolyte (not shown). The electrode group 1 and the electrolyte are housed in the bag-shaped container member 2. The electrolyte (not shown) is held in the electrode group 1.

The bag-shaped container member 2 is made of a laminated film including two resin layers and a metal layer interposed between the resin layers.

As shown in FIG. 6, the electrode group 1 is a flat wound electrode group. As shown in FIG. 7, the flat wound electrode group 1 includes a negative electrode 3, a separator 4, and a positive electrode 5. The separator 4 is interposed between the negative electrode 3 and the positive electrode 5.

The negative electrode 3 includes a negative electrode current collector 3a and a negative electrode active material-containing layer 3b. In the portion of the negative electrode 3 located in the outermost part of the wound electrode group 1, as shown in FIG. 7, the negative electrode active material-containing layer 3b is formed only on the inner surface side of the negative electrode current collector 3a. In the other portion of the negative electrode 3, the negative electrode active material-containing layer 3b is formed on each surface of the negative electrode current collector 3a.

The positive electrode 5 includes a positive electrode current collector 5a and a positive electrode active material-containing layer 5b formed on each surface of the positive electrode current collector 5a.

As shown in FIG. 6, a negative electrode terminal 6 and a positive electrode terminal 7 are located near the outer peripheral end of the wound electrode group 1. The negative electrode terminal 6 is connected to a portion located at the outermost part of the negative electrode current collector 3a. The positive electrode terminal 7 is connected to a portion of the positive electrode current collector 5a located at the outermost part. The negative electrode terminal 6 and the positive electrode terminal 7 are extended out from the opening of the bag-shaped container member 2. A thermoplastic resin layer is provided on the inner surface of the bag-shaped container member 2, and the opening is sealed by thermally fusing the thermoplastic resin layer.

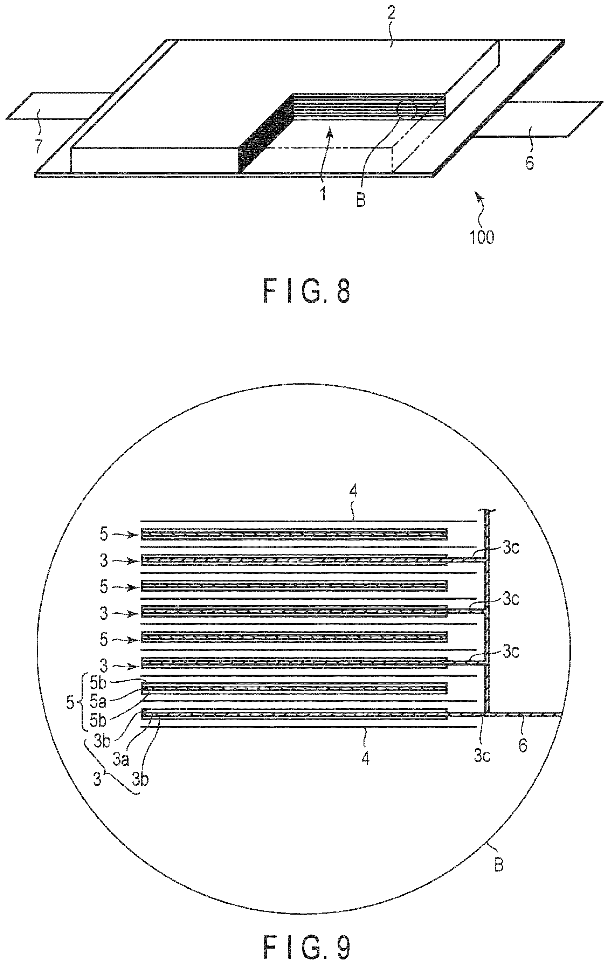

The secondary battery according to the approach is not limited to the secondary battery having the configuration shown in FIGS. 6 and 7, and may be, for example, a battery having a configuration shown in FIGS. 8 and 9.

FIG. 8 is a partially cutaway perspective view schematically showing another example of the secondary battery according to the approach. FIG. 9 is an enlarged cross-sectional view of a portion B of the secondary battery shown in FIG. 8.

A secondary battery 100 shown in FIGS. 8 and 9 includes an electrode group 1 shown in FIGS. 8 and 9, a container member 2 shown in FIG. 8, and an electrolyte (not shown). The electrode group 1 and the electrolyte are housed in the container member 2. The electrolyte is held in the electrode group 1.

The container member 2 is made of a laminated film including two resin layers and a metal layer interposed therebetween.

As shown in FIG. 9, the electrode group 1 is a stacked electrode group. The stacked electrode group 1 has a structure in which a negative electrode 3 and a positive electrode 5 are alternately stacked with a separator 4 interposed therebetween.

The electrode group 1 includes negative electrodes 3. Each of the negative electrodes 3 includes a negative electrode current collector 3a, and a negative electrode active material-containing layer 3b supported on each of both the surfaces of the negative electrode current collector 3a. The electrode group 1 includes positive electrodes 5. Each of the positive electrodes 5 includes a positive electrode current collector 5a, and a positive electrode active material-containing layer 5b supported on each of both the surfaces of the positive electrode current collector 5a.

The negative electrode current collector 3a of each of the negative electrodes 3 includes a portion 3c in which the negative electrode active material-containing layer 3b is not supported on any surface in one side. The portion 3c functions as a negative electrode tab. As shown in FIG. 8, the portion 3c functioning as the negative electrode tab does not overlap with the positive electrode 5. The plurality of negative electrode tabs (portions 3c) are electrically connected to the band-like negative electrode terminal 6. The tip of the band-like negative electrode terminal 6 is drawn out of the container member 2.

Although not shown, the positive electrode current collector 5a of each of the positive electrodes 5 includes a portion in which the positive electrode active material-containing layer 5b is not supported on any surface in one side. The portion functions as a positive electrode tab. The positive electrode tab does not overlap with the negative electrode 3, as with the negative electrode tab (portion 3c). The positive electrode tab is located on the opposite side of the electrode group 1 with respect to the negative electrode tab (portion 3c). The positive electrode tab is electrically connected to the band-like positive electrode terminal 7. The tip of the band-like positive electrode terminal 7 is located on the opposite side of the negative electrode terminal 6, and drawn out of the container member 2.

The secondary battery according to the approach includes the electrode according to the approach. For this, the secondary battery can exhibit a high energy density and excellent rapid charge-and-discharge performance and long life performance.

(Fourth Approach)

According to a fourth approach, a battery module is provided. The battery module includes secondary batteries according to the approach.

In the battery module according to the fourth approach, single batteries may be disposed to be electrically connected in series or in parallel, or may be disposed in a combination of series connection and parallel connection.

Next, an example of the battery module according to the fourth approach will be described with reference to the drawings.

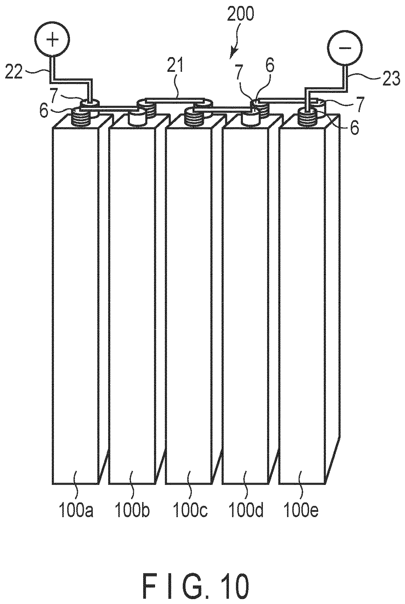

FIG. 10 is a perspective view schematically showing an example of the battery module according to the fourth approach. A battery module 200 shown in FIG. 10 includes five single batteries 100a to 100e, four bus bars 21, a positive electrode side lead 22, and a negative electrode side lead 23. Each of the five single batteries 100a to 100e is the secondary battery according to the approach.

The bus bar 21 connects, for example, a negative electrode terminal 6 of one single battery 100a and a positive electrode terminal 7 of the single battery 100b adjacent to the single battery 100a. Thus, the five single batteries 100 are connected in series by the four bus bars 21. That is, the battery module 200 in FIG. 10 is a battery module of 5 series.

As shown in FIG. 10, among the five single batteries 100a to 100e, the positive electrode terminal 7 of the single battery 100a located at the left end is connected to a positive electrode side lead 22 for external connection. The negative electrode terminal 6 of the single battery 100e located at the right end among the five single batteries 100a to 100e is connected to a negative electrode side lead 23 for external connection.

The battery module according to the approach includes the secondary battery according to the approach. Therefore, the battery module can exhibit a high energy density and excellent rapid charge-and-discharge performance and long life performance.

(Fifth Approach)

According to a fifth approach, a battery pack is provided. The battery pack includes the battery module according to the approach. The battery pack may include the secondary battery according to the approach instead of the battery module according to the approach.

The battery pack according to the approach can further include a protective circuit. The protective circuit has a function for controlling the charge-and-discharge of the secondary battery. Alternatively, a circuit included in an apparatus using the battery pack as a power source (for example, an electronic device and an automobile and the like) may be used as the protective circuit of the battery pack.

The battery pack according to the approach can further include an external power distribution terminal. The external power distribution terminal is intended to output a current from the secondary battery to the outside, and/or to input a current from the outside to the secondary battery. In other words, when the battery pack is used as a power source, a current is supplied to the outside through the external power distribution terminal. When the battery pack is charged, a charging current (including the regenerative energy of the motive force of an automobile or the like) is supplied to the battery pack through the external power distribution terminal.

Next, an example of the battery pack according to the approach will be described with reference to the drawings.

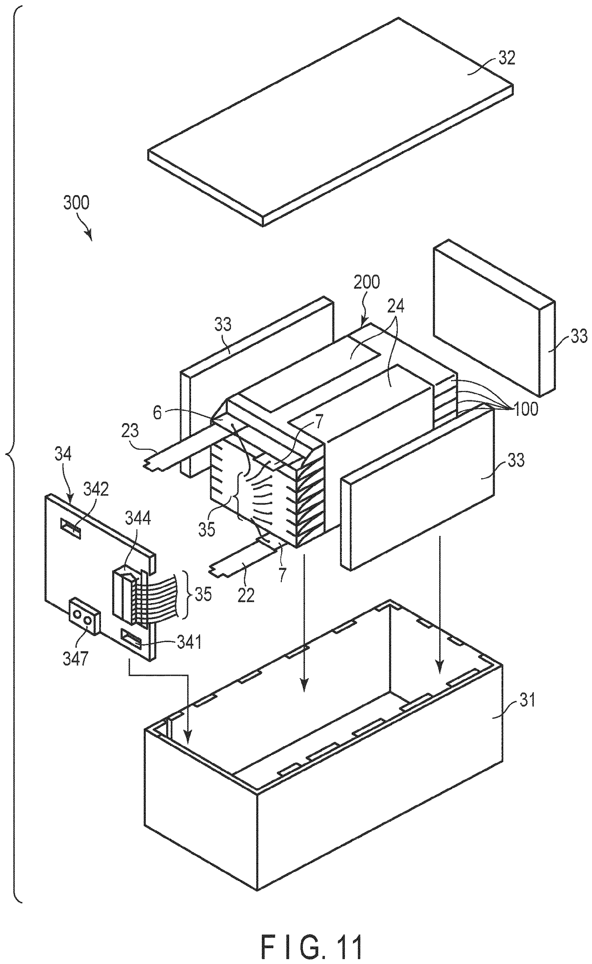

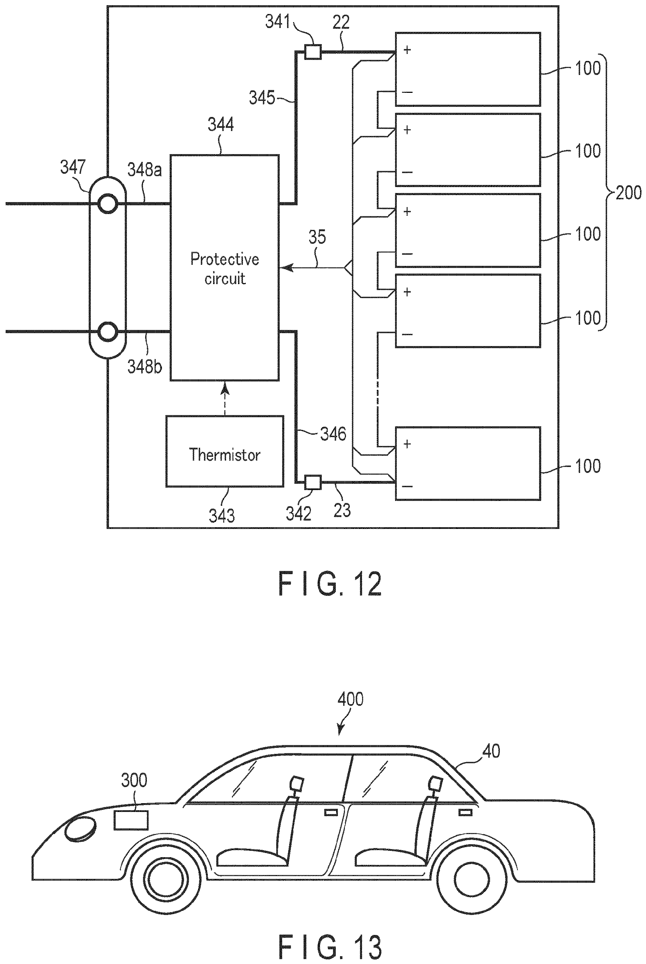

FIG. 11 shows an exploded perspective view schematically showing an example of the battery pack according to the approach. FIG. 12 is a block view showing an example of an electric circuit of the battery pack shown in FIG. 11.

A battery pack 300 shown in FIGS. 11 and 12 includes a housing container 31, a lid 32, a protective sheet 33, a battery module 200, a printed wiring board 34, a wiring 35, and an insulating plate (not shown).

The housing container 31 shown in FIG. 11 is a bottomed square container having a rectangular bottom surface. The housing container 31 is configured to be able to house the protective sheet 33, the battery module 200, the printed wiring board 34, and the wiring 35. The lid 32 has a rectangle shape. The lid 32 covers the housing container 31 to house the battery module 200 and the like. Although not shown, the housing container 31 and the lid 32 are provided with an opening or a connection terminal or the like for connection to an external device or the like.

The battery module 200 includes a plurality of single batteries 100, a positive electrode side lead 22, a negative electrode side lead 23, and an adhesive tape 24.

The single battery 100 has a structure shown in FIGS. 6 and 7. At least one of the single batteries 100 is the secondary battery according to the approach. The single batteries 100 are stacked in an aligned manner such that the negative electrode terminal 6 and the positive electrode terminal 7 extending to the outside are in the same direction. The single batteries 100 are electrically connected to each other in series, as shown in FIG. 12. The single batteries 100 may be electrically connected in parallel, or may be connected in a combination of series connection and parallel connection. When the single batteries 100 are connected in parallel, the capacity of the battery increases as compared with the case where they are connected in series.

The adhesive tape 24 fastens the single batteries 100. In order to fix the single batteries 100, a heat shrinkable tape may be used instead of the adhesive tape 24. In this case, the single batteries 100 are bound by placing the protective sheet 33 on each of both the surfaces of the battery module 200, revolving a heat-shrinkable tape, and thermally shrinking the heat-shrinkable tape.

One end of the positive electrode side lead 22 is connected to the positive electrode terminal 7 of the single battery 100 located at the lowermost layer in the stack of the single batteries 100. One end of the negative electrode side lead 23 is connected to the negative electrode terminal 6 of the single battery 100 located at the uppermost layer in the stack of the single batteries 100.

The printed wiring board 34 is installed along one of the inner surfaces of the housing container 31 in the short-side direction. The printed wiring board 34 includes a positive electrode side connector 341, a negative electrode side connector 342, a thermistor 343, a protective circuit 344, wirings 345 and 346, an external power distribution terminal 347, a plus side wiring 348a, and a minus side wiring 348b. One main surface of the printed wiring board 34 faces a surface from which the negative electrode terminal 6 and the positive electrode terminal 7 extend in the battery module 200. An insulating plate (not shown) is interposed between the printed wiring board 34 and the battery module 200.

The positive electrode side connector 341 has a through hole. When the other end of the positive electrode side lead 22 is inserted into the through hole, the positive electrode side connector 341 and the positive electrode side lead 22 are electrically connected. The negative electrode side connector 342 has a through hole. When the other end of the negative electrode side lead 23 is inserted into the through hole, the negative electrode side connector 342 and the negative electrode side lead 23 are electrically connected.

The thermistor 343 is fixed to one main surface of the printed wiring board 34. The thermistor 343 detects the temperature of each of the single batteries 100, and the detection signal is sent to the protective circuit 344.

The external power distribution terminal 347 is fixed to the other main surface of the printed wiring board 34. The external power distribution terminal 347 is electrically connected to a device present outside the battery pack 300.

The protective circuit 344 is fixed to the other main surface of the printed wiring board 34. The protective circuit 344 is connected to the external power distribution terminal 347 via the plus side wiring 348a. The protective circuit 344 is connected to the external power distribution terminal 347 via the minus side wiring 348b. The protective circuit 344 is electrically connected to the positive electrode side connector 341 via the wiring 345. The protective circuit 344 is electrically connected to the negative electrode side connector 342 via the wiring 346. Furthermore, the protective circuit 344 is electrically connected to each of the single batteries 100 via the wiring 35.

The protective sheet 33 is disposed on both the inner surfaces of the housing container 31 in the long side direction and the inner surface facing the printed wiring board 34 via the battery module 200 in the short side direction. The protective sheet 33 is made of, for example, a resin or a rubber.

The protective circuit 344 controls the charge-and-discharge of the single batteries 100. The protective circuit 344 breaks the electrical connection between the protective circuit 344 and the external power distribution terminal 347 to the external device based on a detection signal transmitted from the thermistor 343 or a detection signal transmitted from each of the single batteries 100 or the battery module 200.

Examples of the detection signal transmitted from the thermistor 343 include a signal obtained by detecting that the temperature of the single battery 100 is equal to or higher than a predetermined temperature. Examples of the detection signal transmitted from each of the single batteries 100 or the battery module 200 include a signal obtained by detecting the over-charge, over-discharge, and over-current of the single battery 100. When over-charge or the like is detected for each of the single batteries 100, a battery voltage may be detected, or a positive electrode potential or a negative electrode potential may be detected. In the latter case, a lithium electrode used as a reference electrode is inserted into each of the single batteries 100.

As the protective circuit 344, a circuit included in an apparatus using the battery pack 300 as a power source (for example, an electronic device or an automobile or the like) may be used.

As described above, the battery pack 300 includes the external power distribution terminal 347. Therefore, the battery pack 300 can output a current from the battery module 200 to the external device and input a current from the external device to the battery module 200 via the external power distribution terminal 347. In other words, when the battery pack 300 is used as a power source, a current from the battery module 200 is supplied to the external device through the external power distribution terminal 347. When the battery pack 300 is charged, a charge current from the external device is supplied to the battery pack 300 through the external power distribution terminal 347. When the battery pack 300 is used as an on-vehicle battery, the regenerative energy of the motive force of a vehicle can be used as the charge current from the external device.

The battery pack 300 may include a plurality of battery modules 200. In this case, the battery modules 200 may be connected in series, connected in parallel, or connected in a combination of series connection and parallel connection. The printed wiring board 34 and the wiring 35 may be omitted. In this case, the positive electrode side lead 22 and the negative electrode side lead 23 may be used as the external power distribution terminal.

Such a battery pack is used, for example, for applications requiring excellent cycle performance when a large current is taken out. Specifically, the battery pack is used as, for example, a power source of an electronic device, a stationary battery, and an on-vehicle battery of various vehicles. Examples of the electronic device include a digital camera. The battery pack is particularly suitably used as the on-vehicle battery.

The battery pack according to the approach includes the secondary battery according to the approach or the battery module according to the approach. Therefore, the battery pack can exhibit a high energy density and excellent rapid charge-and-discharge performance and long life performance.

(Sixth Approach)

According to a sixth approach, a vehicle is provided. The vehicle includes the battery pack according to the approach.

In the vehicle according to the approach, the battery pack recovers, for example, the regenerative energy of the motive force of the vehicle. The vehicle may include a mechanism that converts the kinetic energy of the vehicle into the regenerative energy.

Examples of the vehicle according to the approach include two- to four-wheel hybrid electric automobiles, two- to four-wheel electric automobiles, assisted bicycles, and railway vehicles.

The mounting position of the battery pack in the vehicle according to the approach is not particularly limited. For example, when the battery pack is mounted on an automobile, the battery pack can be mounted in an engine room of the vehicle, behind the vehicle body, or under a seat.

The vehicle according to the approach may include a plurality of battery packs. In this case, the battery packs may be electrically connected in series, electrically connected in parallel, or electrically connected in a combination of series connection and parallel connection.

Next, an example of the vehicle according to the approach will be described with reference to the drawings.

FIG. 13 is a cross-sectional view schematically showing an example of a vehicle according to an approach.

A vehicle 400 shown in FIG. 13 includes a vehicle body 40 and the battery pack 300 according to the fifth approach. In the example shown in FIG. 13, the vehicle 400 is a four-wheeled automobile.

The vehicle 400 may include a plurality of battery packs 300. In this case, the battery packs 300 may be connected in series, connected in parallel, or connected in a combination of series connection and parallel connection.

FIG. 13 illustrates an example in which the battery pack 300 is mounted in an engine room located in front of the vehicle body 40. As described above, the battery pack 300 may be mounted, for example, behind the vehicle body 40 or under a seat. The battery pack 300 can be used as a power source for the vehicle 400. The battery pack 300 can recover the regenerative energy of the motive force of the vehicle 400.

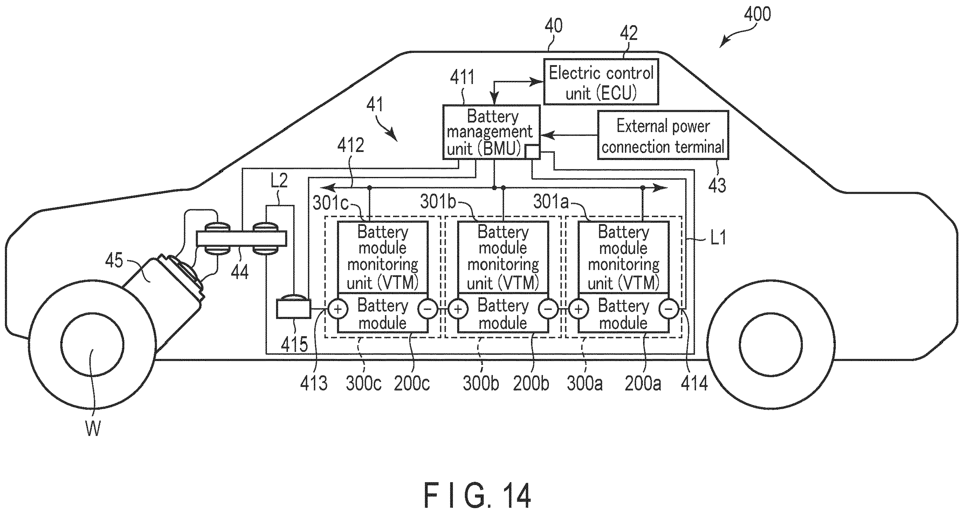

Next, an aspect of the vehicle according to the approach will be described with reference to FIG. 14.

FIG. 14 schematically shows an example of a vehicle according to an approach. The vehicle 400 shown in FIG. 14 is an electric automobile.

The vehicle 400 shown in FIG. 14 includes a vehicle body 40, a vehicle power source 41, a vehicle electric control unit (ECU) 42 which is a host control unit of the vehicle power source 41, an external terminal (a terminal for connection to an external power source) 43, an inverter 44, and a drive motor 45.

In the vehicle 400, the vehicle power source 41 is mounted, for example, in an engine room, behind a vehicle body of an automobile, or under a seat. In the vehicle 400 shown in FIG. 14, the mounting location of the vehicle power source 41 is schematically shown.

The vehicle power source 41 includes a plurality of (for example, three) battery packs 300a, 300b, and 300c, a battery management unit (BMU) 411, and a communication bus 412.

The three battery packs 300a, 300b, and 300c are electrically connected in series. The battery pack 300a includes a battery module 200a, and a voltage temperature monitoring 301a (for example, VTM). The battery pack 300b includes a battery module 200b and a voltage temperature monitoring 301b. The battery pack 300c includes a battery module 200c and a voltage temperature monitoring 301c. Each of the battery packs 300a, 300b, and 300c can be independently removed, and can be replaced with another battery pack 300.

Each of the battery modules 200a to 200c includes a plurality of single batteries connected in series. At least one of the plurality of single batteries is the secondary battery according to the second approach. The battery modules 200a to 200c are respectively charged and discharged through a positive electrode terminal 413 and a negative electrode terminal 414.

In order to collect information on the maintenance of the vehicle power source 41, the battery management unit 411 communicates with the voltage temperature monitorings 301a to 301c, to collect information on the voltage and temperature and the like of the single batteries 100 included in the battery modules 200a to 200c included in the vehicle power source 41.

A communication bus 412 is connected between the battery management unit 411 and the voltage temperature monitorings 301a to 301c. In the communication bus 412, a set of communication lines is shared by a plurality of nodes (the battery management unit and one or more voltage temperature monitorings). The communication bus 412 is a communication bus configured based on, for example, the control area network (CAN) standard.

The voltage temperature monitorings 301a to 301c measure the voltages and temperatures of the individual single batteries constituting the battery modules 200a to 200c based on a command by communication from the battery management unit 411. However, the temperature can be measured at only several places per battery module, and the temperatures of all the single batteries need not be measured.

The vehicle power source 41 can also include an electromagnetic contactor (for example, a switch apparatus 415 shown in FIG. 14) for turning on and off the connection between the positive electrode terminal 413 and the negative electrode terminal 414. The switch apparatus 415 includes a precharge switch (not shown) that is turned on when the battery modules 200a to 200c are charged, and a main switch (not shown) that is turned on when a battery output is supplied to a load. The precharge switch and the main switch include a relay circuit (not shown) that is turned on or off by a signal supplied to a coil disposed near a switch element.

The inverter 44 converts the input DC voltage into a three-phase alternating current (AC) high voltage for driving a motor. Three-phase output terminals of the inverter 44 are connected to three-phase input terminals of the drive motor 45. The inverter 44 controls an output voltage based on a control signal from the battery management unit 411 or the vehicle ECU 42 for controlling the operation of the entire vehicle.

The drive motor 45 is rotated by power supplied from the inverter 44. This rotation is transmitted to an axle and a drive wheel W via, for example, a differential gear unit.

Although not shown, the vehicle 400 includes a regenerative brake mechanism. The regenerative brake mechanism rotates the drive motor 45 when the vehicle 400 is braked, and converts kinetic energy into regenerative energy as electric energy. The regenerative energy recovered by the regenerative brake mechanism is input to the inverter 44 and converted into a direct current. The direct current is input to the vehicle power source 41.

One terminal of a connection line L1 is connected to the negative electrode terminal 414 of the vehicle power source 41 via a current detection unit (not shown) in the battery management unit 411. The other terminal of the connection line L1 is connected to the negative electrode input terminal of the inverter 44.

One terminal of the connection line L2 is connected to the positive electrode terminal 413 of the vehicle power source 41 via the switch apparatus 415. The other terminal of the connection line L2 is connected to the positive electrode input terminal of the inverter 44.

The external terminal 43 is connected to the battery management unit 411. The external terminal 43 can be connected to, for example, an external power source.

The vehicle ECU 42 cooperatively controls the battery management unit 411 together with other apparatuses in response to an operation input provided by a driver or the like to manage the entire vehicle. Between the battery management unit 411 and the vehicle ECU 42, data related to maintenance of the vehicle power source 41, such as the remaining capacity of the vehicle power source 41, is transferred via the communication line.

The vehicle according to the approach includes the battery pack according to the approach. Therefore, according to the present approach, it is possible to provide the vehicle including the battery pack capable of exhibiting a high energy density and excellent rapid charge-and-discharge performance and long life performance.


(Example)

Hereinafter, Examples will be described.

<Synthesis Method>

(Example 1)

First, $Nb_2O_5$ and $TiO_2$, which were commercially available oxide reagents, were prepared. These powders were weighed so that the molar ratio of Nb/Ti was set to 1.07. These were mixed for 1 hour using a dry ball mill. The obtained mixture was put in an electric furnace, and subjected to pre-firing at a temperature of 1000°C for 12 hours. The pre-fired powder was placed in a bead mill apparatus, and using a solution obtained by dissolving 500 ppm of potassium chloride and 100 ppm of diammonium hydrogen phosphate in distilled water, mixing with a wet bead mill was performed for 1 hour. Next, the granulated particles were collected by spray drying using a spray dryer. The granulated particles were put in the electric furnace again, and first main firing was performed at a temperature of 1100°C for 5 hours. After cooling to room temperature, pulverization with a dry ball mill was performed for 30 minutes, and second main firing was performed at a temperature of 1100°C for 5 hours. Thereafter, an annealing treatment was performed at a temperature of 500°C for 2 hours. The powder subjected to the annealing treatment was lightly pulverized using an agate mortar to loosen the aggregation of the particles. Thus, an active material powder according to Example 1 was obtained.

For electrode density measurement and electrochemical measurement described later, an electrode was produced by the following procedure using the produced active material powder.

The active material powder was mixed with 10 parts by weight of acetylene black as a conductive agent based on 100 parts by weight of the active material powder. This mixture was dispersed in NMP (N-methyl-2-pyrrolidone), and 10 parts by weight of polyvinylidene fluoride (PVdF) as a binder was mixed with 100 parts by weight of the active material powder to produce an electrode slurry. This slurry was applied onto a current collector made of an aluminum foil using a blade to obtain a stack. The stack was dried at a temperature of 130°C for 12 hours under vacuum. The dried stack was compressed at a predetermined pressing pressure using a roll press apparatus to obtain an electrode having an electrode density of 2.53 g/cm$^3$.

(Examples 2 to 5 and 13 to 16)

Active material powders were synthesized in the same manner as described in Example 1 except that the amount of $TiO_2$ or $Nb_2O_3$ was changed to change the final molar ratio of Nb/Ti as shown in Table 1, and electrodes were produced using the active material powders.

Here, Examples 2 to 5 and 13 to 16 were carried out in the following procedures.

In Example 2, an active material powder was synthesized in the same manner as described in Example 1 except that the final molar ratio of Nb/Ti was changed to 1.33, and an electrode was produced using this active material powder.

In Examples 3 to 5, active material powders were synthesized in the same manner as described in Example 1 except that the final molar ratio of Nb/Ti was changed to 1.98. Using the obtained active material powders, electrodes were produced in the same manner as in Example 1 except that a pressing pressure at the time of producing the electrodes was made different from that in Example 1 to set an electrode density to 2.00 g/cm$^3$, 2.35 g/cm$^3$, and 3.0 g/cm$^3$.

In Example 6, pre-firing was performed in the same manner as in Example 1 except that the final Nb/Ti molar ratio was 1.98. Then, an active material powder according to Example 6 was produced in the same manner as in Example 1 except that the pre-fired powder was placed in a bead mill apparatus, and wet bead mill mixing was performed for 3 hours using an aqueous solution in which 1000 ppm of potassium chloride and 500 ppm of diammonium hydrogen phosphate as a flux were dissolved , in order to further reduce the average particle size (D50) and increase the ratio n/N of particles in which primary particles are bonded. Thereafter, using this active material powder, an electrode was produced in the same manner as in Example 1.

In Examples 7 and 8, active material powders according to Examples 7 and 8 were produced in the same manner as in Example 1 except that first main firing was performed at a temperature of 1300°C for 5 hours in Example 7 and first main firing was performed at a temperature of 1200°C for 5 hours in Example 8 in order to set the final Nb/Ti molar ratio to 1.98 and adjust the particle size. Thereafter, using this active material powder, an electrode was produced in the same manner as in Example 1.

In Example 9 to 12, active materials powders according to Example 9 to 12 were synthesized in the same manner as in Example 1, except that aqueous solutions obtained by dissolving 500 ppm of potassium chloride and 200 ppm of diammonium hydrogen phosphate as a flux in Example 9, 600 ppm of potassium chloride and 300 ppm of diammonium hydrogen phosphate in Example 10, 900 ppm of potassium chloride and 300 ppm of diammonium hydrogen phosphate in Example 11, and 1000 ppm of potassium chloride and 500 ppm of diammonium hydrogen phosphate in Example 12 were used, in order to set the final Nb/Ti molar ratio to 1.98 and adjust the ratio n/N of first single particles, and electrodes were produced using the active material powders.

Active material powders were synthesized in the same manner as described in Example 1 except that the final Nb/Ti molar ratio was changed to 2 in Example 13, the final Nb/Ti molar ratio was changed to 5 in Example 14, the final Nb/Ti molar ratio was changed to 14 in Example 15, and the final Nb/Ti molar ratio was changed to 24 in Example 16, and electrodes were produced using the active material powders.

(Example 17)

In Example 17, an active material powder according to Example 17 was obtained in the same manner as in Example 1 except that the final Nb/Ti molar ratio was set to 1.98, and a pre-fired powder was mixed with a wet bead mill for 1 hour without adding a flux component to distilled water in order to suppress the ratio n/N of first single particles. Using this active material powder, an electrode was produced in the same manner as in Example 1.

(Example 18)

In Example 18, an active material powder according to Example 18 was synthesized in the same manner as in Example 1 except that the final Nb/Ti molar ratio was set to 1.98, and the amount of potassium chloride as a flux was set to 2000 ppm and the amount of diammonium hydrogen phosphate was set to 500 ppm in order to increase the ratio n/N of first single particles, and an electrode was produced using the active material powder.

(Comparative Example 1)

$Nb_2O_5$ and $TiO_2$, which were commercially available oxide reagents, were prepared. These powders were weighed so that the molar ratio of Nb/Ti was set to 1.98 as a target composition. These were mixed for 1 hour using a ball mill. The obtained mixture was put in an electric furnace, and subjected to firing at a temperature of 1200°C for 12 hours.

As described above, when solid phase synthesis is performed, in which raw material powders are mixed at a target composition ratio and then synthesized by one-time firing, not only particle growth proceeds to increase a primary particle size, but also a large number of agglomerates in which primary particles are bound to each other are present. Therefore, for example, in order to achieve a high energy density and excellent rapid charge-and-discharge performance, it is required to perform strong pulverization using a hammer mill and/or a ball mill in order to loosen the agglomerates to obtain a powder having a high proportion of primary particles.

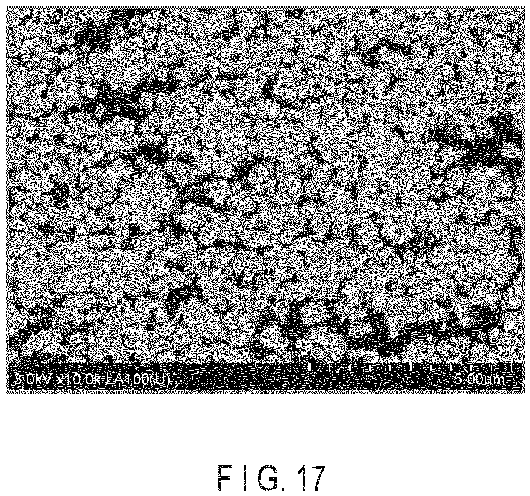

In Comparative Example 1, after strong pulverization using a hammer mill and a roller compactor was performed, an active material powder was pulverized using a planetary ball mill in order to set the average particle size (D50) of the primary particles to a value of 50 μm or less. Only particles not having recessed parts in the primary particles were produced. Using this active material powder, an electrode was produced in the same manner as in Example 1. A scanning electron microscope photograph of the surface of an active material-containing layer of the electrode of Comparative Example 1 is shown in FIG. 17. As shown in FIG. 17, irregularities were hardly observed on the surface of the primary particles.

(Comparative Example 2)

In Comparative Example 2, an active material powder according to Comparative Example 2 was obtained in the same manner as in Example 1 except that the final Nb/Ti molar ratio to 1.98 and an annealing treatment was performed at a temperature of 900°C for 3 hours after second main firing in order to reduce the a/L ratio, that is, to promote the necking of a bonded part of particles. Using this active material powder, an electrode was produced in the same manner as in Example 1.

(Comparative Example 3)

In Comparative Example 3, an active material powder according to Comparative Example 3 was obtained in the same manner as in Example 1 except that the final Nb/Ti molar ratio to 1.98 and an annealing treatment was performed at a temperature of 400°C for 1 hour after second main firing in order to increase the a/L ratio, that is, to suppress the necking of a bonded part of particles. Using this active material powder, an electrode was produced in the same manner as in Example 1.

(Comparative Example 4)

In Comparative Example 4, an active material powder according to Comparative Example 4 was obtained in the same manner as in Example 1 except that the final Nb/Ti molar ratio was set to 1.98 and pulverization with a dry ball mill was performed for 30 minutes after first main firing in order to reduce the number of bonded particles so that the number of recessed parts present in primary particles was reduced. Using this active material powder, an electrode was produced in the same manner as in Example 1.

<Measurement of Powder X-Ray Diffraction>

For the active material powder obtained in each of Examples and Comparative Examples, a diffraction pattern was obtained according to the method described in the approach, and analysis was performed by the Rietveld method. A crystallite size was examined from the obtained diffraction line. Tables 1 to 4 show the crystal phases, weight ratios, and crystallite sizes of the active material powders according to Examples and Comparative Examples. $Nb_2TiO_7$ and $TiO_2$ and the like described in the crystal phase indicate types of crystal phases such as $Nb_2TiO_7$ type and $TiO_2$ type.

<Measurement of a/L and n/N>

For the active material powder obtained in each of Examples and Comparative Examples, an image analysis tool ImageJ was used according to the method described in the approach to measure a ratio a/L of a distance a to a farthest particle recessed part among the lengths of the perpendicular line of a tangent line. The length L of the tangent line is defined by one protrusion portion and the other protrusion portion with a recessed part interposed between the protrusion portions in a particle having a shape that plural particles are bound together. Regarding the single particle having three or more recessed parts, the minimum value and the maximum value of all the ratios a/L of the recessed parts of each single particle are shown in Tables 1 and 3. n/N in a visual field of 20 μm square was obtained. The results are shown in Tables 1 to 4

<Confirmation of Single Particle>

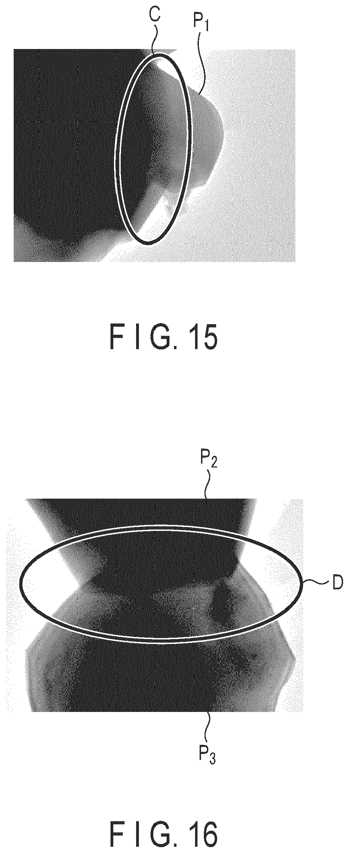

Whether or not the particle constituting the active material obtained in each of Examples and Comparative Examples was a single particle was determined by transmission electron microscope observation. The vicinity of a recessed part that looks like a bonded part formed by bonding primary particles was observed with a transmission electron microscope. Examples of observation results are shown in FIGS. 15 and 16. As shown in FIG. 15, no boundary line was observed in the vicinity C of a recessed part of a particle $P_1$. For this, the particle $P_1$ is a primary particle, that is, a single particle. Meanwhile, as shown in FIG. 16, a line serving as a boundary was clearly observed in the vicinity D of a recessed part that looks like a bonded part in which a particle $P_2$ and a particle $P_3$ were bonded. For this, the particles $P_2$ and $P_3$ constitute a secondary particle.

<Measurement of Electrode Density>

The density of the electrode (excluding a current collector) obtained in each of Examples and Comparative Examples was measured. The obtained electrode was cut into a 5 cm square size, and the thickness and weight of the active material-containing layer were measured to calculate the density of the electrode.

<Electrochemical Measurement>

An electrochemical measurement cell was produced using the electrode produced in each of Examples and Comparative Examples, a metal lithium foil as a counter electrode, and a nonaqueous electrolyte. As the nonaqueous electrolyte, a nonaqueous electrolytic solution in which lithium hexafluorophosphate was dissolved at a concentration of 1 M in a mixed solvent of ethylene carbonate and diethyl carbonate (volume ratio: 1 : 1) was used.

The produced electrochemical measurement cell was charged and discharged in a potential range of 1.0 V to 3.0 V based on a metal lithium electrode. A charge-and-discharge current value was set to 0.2 C (time discharge rate), and a 0.2 C discharge capacity was confirmed at room temperature. The value of the 0.2 C discharge capacity is an index of the energy density. Next, as an index of rapid discharge performance, discharge was performed at 10 C, and a discharge capacity ratio to 0.2 C capacity was obtained. In order to confirm that the negative electrode active material of each of Examples could be stably charged and discharged, the cell of each of Examples and Comparative Examples was repeatedly charged and discharged for 100 cycles (1 cycle of charge-and-discharge), and a discharge capacity retention ratio after 100 cycles was examined. Repeated charge-and-discharge was performed at room temperature in a potential range of 1.0 V to 3.0 V based on the metal lithium electrode, at a current value of 1 C (time discharge rate). In order to confirm the discharge capacity retention ratio after 100 times, charge-and-discharge was performed again at 0.2 C (time discharge rate), and a discharge capacity after 100 times was divided by an initial discharge capacity and multiplied by 100 to calculate a capacity retention ratio (%) when the initial discharge capacity was 100%. This capacity retention ratio is an index of long life performance. The above results are summarized in Tables 1 to 4.

Table 1

| Table 1 | Molar ratio ($M_{Nb}/M_{Ti}$) | Crystal phase (% by weight) | Crystallite size (nm) | Average particle size D50 ($\mu$m) | a/L Minimum value | a/L Maximum value | n/N |
|---|---|---|---|---|---|---|---|
| Example 1 | 1.07 | $Nb_2TiO_7$ (82%) +$TiO_2$ (18%) | 102 | 2.8 | 0.12 | 0.33 | 0.017 |
| Example 2 | 1.33 | $Nb_2TiO_7$(86%) +$TiO_2$(14%) | 100 | 1.9 | 0.15 | 0.35 | 0.031 |
| Example 3 | 1.98 | $Nb_2TiO_7$ (100%) | 108 | 2.2 | 0.17 | 0.29 | 0.018 |
| Example 4 | 1.98 | $Nb_2TiO_7$ (100%) | 108 | 2.2 | 0.13 | 0.42 | 0.019 |
| Example 5 | 1.98 | $Nb_2TiO_7$ (100%) | 108 | 2.2 | 0.11 | 0.38 | 0.018 |
| Example 6 | 1.98 | $Nb_2TiO_7$ (100%) | 79 | 0.3 | 0.39 | 0.5 | 0.48 |

(continued)

| Table 1 | Molar ratio ($M_{Nb}/M_{Ti}$) | Crystal phase (% by weight) | Crystallite size (nm) | Average particle size D50 ($\mu$m) | a/L Minimum value | a/L Maximum value | n/N |
|---|---|---|---|---|---|---|---|
| Example 7 | 1.98 | $Nb_2TiO_7$ (100%) | 112 | 20 | 0.1 | 0.12 | 0.25 |
| Example 8 | 1.98 | $Nb_2TiO_7$ (100%) | 102 | 5.8 | 0.3 | 0.36 | 0.15 |
| Example 9 | 1.98 | $Nb_2TiO_7$ (100%) | 102 | 2.3 | 0.16 | 0.33 | 0.02 |
| Example 10 | 1.98 | $Nb_2TiO_7$ (100%) | 102 | 2.2 | 0.21 | 0.28 | 0.08 |
| Example 11 | 1.98 | $Nb_2TiO_7$ (100%) | 102 | 2.2 | 0.2 | 0.31 | 0.13 |
| Example 12 | 1.98 | $Nb_2TiO_7$ (100%) | 102 | 2.3 | 0.13 | 0.37 | 0.38 |
| Example 13 | 2 | $Nb_2TiO_7$ (100%) | 101 | 2.1 | 0.18 | 0.36 | 0.015 |
| Example 14 | 5 | $Nb_{10}Ti_2O_{29}$ (100%) | 98 | 2.1 | 0.19 | 0.33 | 0.02 |
| Example 15 | 14 | $Nb_{14}TiO_{37}$ (100%) | 93 | 2.4 | 0.12 | 0.44 | 0.016 |

Table 2

| Table 2 | Electrode density (g/cm$^3$) | 0.2C Discharge capacity (mAh/g) | 10C/0.2C Discharge capacity ratio | Cycle capacity retention ratio (%) |
|---|---|---|---|---|
| Example 1 | 2.53 | 238.3 | 0.78 | 93.5 |
| Example 2 | 2.52 | 242.2 | 0.76 | 95.1 |
| Example 3 | 2 | 263.9 | 0.81 | 96.2 |
| Example 4 | 2.35 | 265.3 | 0.83 | 95.8 |
| Example 5 | 3 | 264.7 | 0.76 | 93.4 |
| Example 6 | 2.53 | 261.6 | 0.81 | 82.1 |
| Example 7 | 2.86 | 263.1 | 0.73 | 87.5 |
| Example 8 | 2.78 | 268.4 | 0.78 | 93.3 |
| Example 9 | 2.66 | 269.2 | 0.84 | 94.9 |
| Example 10 | 2.67 | 270.7 | 0.86 | 96.7 |

(continued)

| Table 2 | Electrode density (g/cm$^3$) | 0.2C Discharge capacity (mAh/g) | 10C/0.2C Discharge capacity ratio | Cycle capacity retention ratio (%) |
|---|---|---|---|---|
| Example 11 | 2.65 | 271 | 0.87 | 96.9 |
| Example 12 | 2.62 | 268.6 | 0.86 | 97 |
| Example 13 | 2.65 | 262.5 | 0.83 | 93.9 |
| Example 14 | 2.63 | 259.1 | 0.84 | 89.1 |
| Example 15 | 2.64 | 255.5 | 0.86 | 88.8 |

Table 3

| Table 3 | Molar ratio ($M_{Nb}$ / $M_{Ti}$) | Crystal phase (% by weight) | Crystallite size (nm) | Average particle size D50 ($\mu$m) | a/L Minimum value | a/L Maximum value | n/N |
|---|---|---|---|---|---|---|---|
| Example 16 | 24 | $Nb_{24}TiO_{62}$ (100%) | 110 | 2.2 | 0.11 | 0.38 | 0.018 |
| Example 17 | 1.98 | $Nb_2TiO_7$ (100%) | 102 | 2.3 | 0.12 | 0.41 | 0.008 |
| Example 18 | 1.98 | $Nb_2TiO_7$ (100%) | 103 | 2.3 | 0.03 | 0.13 | 0.51 |
| Comparative Example 1 | 1. 98 | $Nb_2TiO_7$ (100%) | 75 | 2.3 | - | - | - |
| Comparative Example 2 | 1. 98 | $Nb_2TiO_7$ (100%) | 102 | 2.3 | 0.09 | 0.36 | 0.019 |
| Comparative Example 3 | 1. 98 | $Nb_2TiO_7$ (100%) | 102 | 2.3 | 0.35 | 0.72 | 0.02 |
| Comparative Example 4 | 1.98 | $Nb_2TiO_7$ (100%) | 103 | 2.4 | 0.12 | 0.31 | 0 |

Table 4

| Table 4 | Electrode density (g/cm$^3$) | 0.2C Discharge capacity (mAh/g) | 10C/0.2C Discharge capacity ratio | Cycle capacity retention ratio (%) |
|---|---|---|---|---|
| Example 16 | 2.62 | 244.8 | 0.85 | 86.6 |
| Example 17 | 2.65 | 268.3 | 0.75 | 79.3 |
| Example 18 | 2.58 | 261.7 | 0.72 | 78.5 |
| Comparative Example 1 | 2.65 | 267.5 | 0.73 | 77.5 |
| Comparative Example 2 | 2.65 | 267.3 | 0.74 | 78.2 |
| Comparative Example 3 | 2.55 | 268.5 | 0.75 | 72.6 |

(continued)

| Table 4 | Electrode density (g/cm$^3$) | 0.2C Discharge capacity (mAh/g) | 10C/0.2C Discharge capacity ratio | Cycle capacity retention ratio (%) |
|---|---|---|---|---|
| Comparative Example 4 | 2.63 | 268.1 | 0.75 | 69.1 |

As shown in the results of Tables 1 to 4, the active material of each of Examples 1 to 18 has a more excellent cycle capacity retention ratio than that of the active material of each of Comparative Examples 1, 2, 3, and 4. The active materials of Examples 1 and 2 contain a $Nb_2TiO_7$ type crystal phase and a $TiO_2$ type crystal phase. The $TiO_2$ type crystal phase was precipitated in a domain boundary part of the $Nb_2TiO_7$ type crystal phases. The active material of Comparative Example 1 does not contain the first single particle of the approach. In the active materials of Comparative Example 2 and Comparative Example 3, a/L of the recessed part of the single particles does not satisfy $0.1 \leq a/L \leq 0.5$.

The active material of Comparative Example 4 contains only single particles having two or less recessed parts satisfying $0.1 \leq a/L \leq 0.5$.

The comparison of Examples 9 to 12 and Examples 17 and 18 shows that Examples 9 to 12 in which n/N satisfies $0.01 \leq n/N \leq 0.5$ have more excellent rapid discharge performance and cycle capacity retention ratio than those of Examples 17 and 18 in which n/N is less than 0.01 or more than 0.5.

The comparison of Examples 6 to 8 shows that Example 8 having an average particle size of 0.5 $\mu$m to 6 $\mu$m has more excellent rapid discharge performance and cycle capacity retention ratio than those of Examples 6 and 7 having an average particle diameter of less than 0.5 $\mu$m or more than 6 $\mu$m.

The comparison of Examples 13 to 16 shows that Example 13 containing the monoclinic niobium-titanium composite oxide represented by $Li_xTi_{1-y}M1_yNb_{2-z}M2_zO_{7+\delta}$ or $Ti_{1-y}M3_{y+z}Nb_{2-z}O_{7-\delta}$ has an excellent cycle capacity retention ratio than that of each of Examples 14 to 16 containing a niobium-titanium composite oxide having another composition.

According to at least one approach described above, an active material containing particles containing a niobium-containing oxide is provided. The particles containing the niobium-containing oxide contain single particles having protruded parts and recessed parts. Three or more of the recessed parts satisfy $0.1 \leq a/L \leq 0.5$. As a result, the life performance can be improved.

The present disclosure also encompasses the following approaches of an active material, an electrode, a secondary battery, a battery pack and a vehicle:

1. An active material comprising particles containing a niobium-containing oxide, wherein:
the particles containing the niobium-containing oxide comprises a single particle (394) having protruded parts (501, 503, or 505) and recessed parts (502, 504); and three or more of the recessed parts (502, 504) satisfying the following formula (1):

$$0.1 \leq a/L \leq 0.5 \quad (1)$$

wherein L is a length of a tangent line in contact with a first protruded part (501, 505) and a second protruded part (503); and a is a maximum length of a perpendicular line from the tangent line to a recessed part (502, 504) defined by the first protruded part (501, 505) and the second protruded part (503).

2. The active material according to clause 1, wherein the particles containing the niobium-containing oxide have an average particle size (D50) in a range of 0.5 $\mu$m to 6 $\mu$m.

3. The active material according to any one of clauses 1 to 2, wherein a content of the particles containing the niobium-containing oxide is in a range of 75% by weight to 100% by weight.

4. The active material according to any one of clauses 1 to 3, wherein the niobium-containing oxide contains at least one crystal phase selected from the group consisting of $Nb_2TiO_7$, $Nb_2Ti_2O_9$, $Nb_{10}Ti_2O_{29}$, $Nb_{14}TiO_{37}$, and $Nb_{24}TiO_{62}$.

5. The active material according to any one of clauses 1 to 4, wherein the niobium-containing oxide is a monoclinic niobium-titanium composite oxide.

6. The active material according to any one of clauses 1 to 5, further comprising at least one selected from the group consisting of lithium titanate having a ramsdellite structure, lithium titanate having a spinel structure, monoclinic titanium dioxide, anatase titanium dioxide, rutile titanium dioxide, a hollandite titanium composite oxide, and an orthorhombic titanium-containing composite oxide.

7. An electrode (3 or 5) comprising the active material according to any one of clauses 1 to 6.

8. The electrode (3 or 5) according to clause 7, which satisfies the following formula (2):

$$0.01 \leq n/N \leq 0.5 \quad (2)$$

wherein:
N is a total number of particles in a 20 $\mu$m-square region of a surface of the electrode (3 or 5); and n is a number of single particles (394) in the 20 $\mu$m-square region.
9. The electrode (3 or 5) according to any one of clauses 1 to 8, wherein the electrode (3 or 5) has an electrode density in a range of 2.3 g/cm$^3$ to 3 g/cm$^3$.
10. A secondary battery (100) comprising a positive electrode (5), a negative electrode (3), and an electrolyte, wherein the positive electrode (5) or the negative electrode (3) is the electrode according to any one of clauses 1 to 9.
11. A battery pack (300, 300a, 300b or 300c) comprising the secondary battery (100) according to clause 10.
12. The battery pack (300, 300a, 300b or 300c) according to clause 11, further comprising:

> an external power distribution terminal (347); and
> a protective circuit (344).

13. The battery pack (300, 300a, 300b or 300c) according to any one of clauses 11 to 12,
wherein: the battery pack (300, 300a, 300b or 300c) includes a plurality of the secondary battery (100); and the secondary batteries (100) are electrically connected in series, in parallel, or in a combination of series and parallel.
14. A vehicle (400) comprising the battery pack (300, 300a, 300b or 300c) according to any one of clauses 11 to 13 .
15. The vehicle (400) according to clause 14, further comprising a mechanism configured to convert kinetic energy of the vehicle into regenerative energy.

While certain approaches have been described, these approaches have been presented by way of example only, and are not intended to limit the scope of the claims. Indeed, the approaches described herein may be embodied in a variety of other forms; furthermore, various omissions, substitutions and changes in the form of the approaches described herein may be made.

**Claims**

1.  An active material comprising particles containing a niobium-containing oxide,
    wherein:
    the particles containing the niobium-containing oxide comprises a single particle (394) having protruded parts (501, 503, or 505) and recessed parts (502, 504); and three or more of the recessed parts (502, 504) satisfying the following formula (1):

$$0.1 \leq a/L \leq 0.5 \quad (1)$$

wherein L is a length of a tangent line in contact with a first protruded part (501, 505) and a second protruded part (503); and a is a maximum length of a perpendicular line from the tangent line to a recessed part (502, 504) defined by the first protruded part (501, 505) and the second protruded part (503).

2.  The active material according to claim 1, wherein the particles containing the niobium-containing oxide have an average particle size (D50) in a range of 0.5 $\mu$m to 6 $\mu$m.

3.  The active material according to any one of claims 1 to 2, wherein a content of the particles containing the niobium-containing oxide is in a range of 75% by weight to 100% by weight.

4.  The active material according to any one of claims 1 to 3, wherein the niobium-containing oxide contains at least one crystal phase selected from the group consisting of $Nb_2TiO_7$, $Nb_2Ti_2O_9$, $Nb_{10}Ti_2O_{29}$, $Nb_{14}TiO_{37}$, and $Nb_{24}TiO_{62}$.

5.  The active material according to any one of claims 1 to 4, wherein the niobium-containing oxide is a monoclinic niobium-titanium composite oxide.

**6.** The active material according to any one of claims 1 to 5, further comprising at least one selected from the group consisting of lithium titanate having a ramsdellite structure, lithium titanate having a spinel structure, monoclinic titanium dioxide, anatase titanium dioxide, rutile titanium dioxide, a hollandite titanium composite oxide, and an orthorhombic titanium-containing composite oxide.

**7.** An electrode (3 or 5) comprising the active material according to any one of claims 1 to 6.

**8.** The electrode (3 or 5) according to claim 7, which satisfies the following formula (2):

$$0.01 \leq n/N \leq 0.5 \quad (2)$$

wherein:
N is a total number of particles in a 20 $\mu$m-square region of a surface of the electrode (3 or 5); and n is a number of single particles (394) in the 20 $\mu$m-square region.

**9.** The electrode (3 or 5) according to any one of claims 1 to 8, wherein the electrode (3 or 5) has an electrode density in a range of 2.3 g/cm$^3$ to 3 g/cm$^3$.

**10.** A secondary battery (100) comprising a positive electrode (5), a negative electrode (3), and an electrolyte, wherein the positive electrode (5) or the negative electrode (3) is the electrode according to any one of claims 1 to 9.

**11.** A battery pack (300, 300a, 300b or 300c) comprising the secondary battery (100) according to claim 10.

**12.** The battery pack (300, 300a, 300b or 300c) according to claim 11, further comprising:

an external power distribution terminal (347); and
a protective circuit (344).

**13.** The battery pack (300, 300a, 300b or 300c) according to any one of claims 11 to 12,
wherein: the battery pack (300, 300a, 300b or 300c) includes a plurality of the secondary battery (100); and the secondary batteries (100) are electrically connected in series, in parallel, or in a combination of series and parallel.

**14.** A vehicle (400) comprising the battery pack (300, 300a, 300b or 300c) according to any one of claims 11 to 13.

**15.** The vehicle (400) according to claim 14, further comprising a mechanism configured to convert kinetic energy of the vehicle into regenerative energy.

FIG. 1

F I G. 2

FIG. 3

FIG. 4

F I G. 5

FIG. 6

FIG. 7

F I G. 8

F I G. 9

F I G. 10

F I G. 11

F I G. 12

F I G. 13

F I G. 14

EP 4 245 724 A1

F I G. 15

F I G. 16

3.0kV x10.0k LA100(U)　　　　　5.00um

F I G. 17

Europäisches
Patentamt
European
Patent Office
Office européen
des brevets

## EUROPEAN SEARCH REPORT

Application Number

EP 22 19 1679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/376307 A1 (HARADA YASUHIRO [JP] ET AL) 2 December 2021 (2021-12-02) | 1-5,7-15 | INV. C01G33/00 |
| Y | * examples 1-23; table 1 * <br> * table 2 * | 1-15 | |
| X | US 10 862 118 B2 (TOSHIBA KK [JP]; TOSHIBA INFRASTRUCTURE SYSTEMS & SOLUTIONS CORP [JP]) 8 December 2020 (2020-12-08) <br> * examples 1-11; tables 1-3 * | 1-5,7-15 | |
| X | US 2017/077494 A1 (IWASAKI TAKUYA [JP] ET AL) 16 March 2017 (2017-03-16) | 1-5,7-15 | |
| Y | * tables 1-3 * | 1-15 | |
| X | US 2016/276652 A1 (IWASAKI TAKUYA [JP] ET AL) 22 September 2016 (2016-09-22) | 1-15 | |
| Y | * tables 1-25 * | 1-15 | |
| X | US 2017/271667 A1 (YOSHIDA YORIKAZU [JP] ET AL) 21 September 2017 (2017-09-21) | 1-5,7-15 | |
| Y | * claim 4; example 1 * | 1-15 | TECHNICAL FIELDS SEARCHED (IPC) |
| X | US 9 893 349 B2 (TOSHIBA KK [JP]) 13 February 2018 (2018-02-13) | 1-5,7-15 | C01G |
| Y | * claims 1-15; figure 6; example 1 * | 1-15 | |
| X | JP 2016 066600 A (TOSHIBA CORP) 28 April 2016 (2016-04-28) | 1-5,7-15 | |
| Y | * paragraph [[0188]]; figure 8; examples 1-6 * | 1-15 | |

The present search report has been drawn up for all claims

| Place of search | Date of completion of the search | Examiner |
|---|---|---|
| Munich | 3 August 2023 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 1679

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2023

| Patent document cited in search report | | | Publication date | Patent family member(s) | | | Publication date |
|---|---|---|---|---|---|---|---|
| US | 2021376307 | A1 | 02-12-2021 | CN | 113745495 | A | 03-12-2021 |
| | | | | EP | 3915941 | A1 | 01-12-2021 |
| | | | | JP | 2021190250 | A | 13-12-2021 |
| | | | | US | 2021376307 | A1 | 02-12-2021 |
| US | 10862118 | B2 | 08-12-2020 | CN | 110299536 | A | 01-10-2019 |
| | | | | JP | 6937262 | B2 | 22-09-2021 |
| | | | | JP | 2019169343 | A | 03-10-2019 |
| | | | | US | 2019296343 | A1 | 26-09-2019 |
| US | 2017077494 | A1 | 16-03-2017 | CN | 106848284 | A | 13-06-2017 |
| | | | | EP | 3145005 | A1 | 22-03-2017 |
| | | | | JP | 6612566 | B2 | 27-11-2019 |
| | | | | JP | 2017059394 | A | 23-03-2017 |
| | | | | US | 2017077494 | A1 | 16-03-2017 |
| US | 2016276652 | A1 | 22-09-2016 | CN | 105990576 | A | 05-10-2016 |
| | | | | EP | 3070767 | A1 | 21-09-2016 |
| | | | | JP | 6193285 | B2 | 06-09-2017 |
| | | | | JP | 2016177977 | A | 06-10-2016 |
| | | | | KR | 20160112947 | A | 28-09-2016 |
| | | | | US | 2016276652 | A1 | 22-09-2016 |
| US | 2017271667 | A1 | 21-09-2017 | CN | 107204454 | A | 26-09-2017 |
| | | | | EP | 3220455 | A1 | 20-09-2017 |
| | | | | JP | 6710554 | B2 | 17-06-2020 |
| | | | | JP | 2017168352 | A | 21-09-2017 |
| | | | | KR | 20170108812 | A | 27-09-2017 |
| | | | | KR | 20190019995 | A | 27-02-2019 |
| | | | | US | 2017271667 | A1 | 21-09-2017 |
| US | 9893349 | B2 | 13-02-2018 | CN | 107068985 | A | 18-08-2017 |
| | | | | JP | 6570934 | B2 | 04-09-2019 |
| | | | | JP | 2017059397 | A | 23-03-2017 |
| | | | | US | 2017077504 | A1 | 16-03-2017 |
| JP | 2016066600 | A | 28-04-2016 | JP | 6396270 | B2 | 26-09-2018 |
| | | | | JP | 2016066600 | A | 28-04-2016 |
| | | | | KR | 20160033602 | A | 28-03-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M.GASPERIN.** *Journal of Solid State Chemistry,* 1984, vol. 53, 144-147

- **DR. MICHAEL et al.** Image Processing with ImageJ, Reprinted from the. Biophotonics International copyrighted by Laurin Publishing Co. INC, July 2004